(19) Europäisches Patentamt
European Patent Office
Office européen des brevets

(11) **EP 2 350 634 B1**

(12) **FASCICULE DE BREVET EUROPEEN**

(45) Date de publication et mention
de la délivrance du brevet:
**21.01.2015 Bulletin 2015/04**

(21) Numéro de dépôt: **09759967.4**

(22) Date de dépôt: **03.11.2009**

(51) Int Cl.:
**G01N 27/447** (2006.01)   **B01L 3/00** (2006.01)

(86) Numéro de dépôt international:
**PCT/FR2009/001273**

(87) Numéro de publication internationale:
**WO 2010/052387 (14.05.2010 Gazette 2010/19)**

(54) **DISPOSITIF MICROFLUIDIQUE DE SÉPARATION OU DE FRACTIONNEMENT OU DE PRÉCONCENTRATION D'ANALYTES CONTENUS DANS UN ÉLECTROLYTE**

MIKROFLUIDIKVORRICHTUNG ZUR TRENNUNG ODER AUFTRENNUNG ODER VORKONZENTRIERUNG VON IN EINEM ELEKTROLYTEN ENTHALTENEN ANALYTEN

MICROFLUIDIC DEVICE FOR THE SEPARATION OR FRACTIONING OR PRECONCENTRATION OF ANALYTES CONTAINED IN AN ELECTROLYTE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **04.11.2008 FR 0806137**

(43) Date de publication de la demande:
**03.08.2011 Bulletin 2011/31**

(73) Titulaire: **Etat Français Représenté Par Le Délégué Général**
**Pour L'Armement**
**00457 Armées (FR)**

(72) Inventeur: **PLECIS, Adrien**
**F-91710 Vert-le-Petit (FR)**

(56) Documents cités:
EP-A- 1 362 827            WO-A-00/60341
DE-A1-102006 004 887       US-A1- 2002 079 219

- SNIADECKI N J ET AL: "INDUCED PRESSURE PUMPING IN POLYMER MICROCHANNELS VIA FIELD-EFFECT FLOW CONTROL" 1 avril 2004 (2004-04-01), ANALYTICAL CHEMISTRY, AMERICAN CHEMICAL SOCIETY. COLUMBUS, US, PAGE(S) 1942 - 1947 , XP001196729 ISSN: 0003-2700 page 1942, colonne 2; figure 1
- MPHOLO M ET AL: "Low voltage plug flow pumping using anisotropic electrode arrays" 15 juillet 2003 (2003-07-15), SENSORS AND ACTUATORS B, ELSEVIER SEQUOIA S.A., LAUSANNE, CH, PAGE(S) 262 - 268 , XP004427491 ISSN: 0925-4005 abrégé; figure 2
- KIM J H ET AL: "A disposable capillary electrophoresis microchip with an indium tin oxide decoupler/amperometric detector" MICROELECTRONIC ENGINEERING, ELSEVIER PUBLISHERS BV., AMSTERDAM, NL, vol. 78-79, 1 mars 2005 (2005-03-01), pages 563-570, XP004803679 ISSN: 0167-9317
- CHIEN-HSIEN WU ET AL: "Electrokinetically driven flow control using bare electrodes" 6 janvier 2007 (2007-01-06), MICROFLUIDICS AND NANOFLUIDICS, SPRINGER, BERLIN, DE, PAGE(S) 485 - 494 , XP019496787 ISSN: 1613-4990 abrégé; figures 1,2

## Description

L'invention concerne le domaine de la recherche ou de l'analyse des matériaux par l'emploi de moyens électriques et a plus particulièrement pour objet un dispositif microfluidique de séparation ou de fractionnement ou de préconcentration d'analytes contenus dans un électrolyte.

Le potentiel de surface est impliqué dans de nombreux processus de séparation analytique. Par exemple, on connaît des dispositifs microfluidiques de séparation d'analytes contenus dans un électrolyte mettant en oeuvre l'électrophorèse capillaire. Ce procédé est généralement mise en oeuvre par un réseau microfluidique dans lequel sont injectés un électrolyte et un échantillon renfermant des analytes. Ce réseau peut comporter un certain nombre de réservoirs relié à au moins un long microcanal et/ou à un réseau de microcanaux présentant des intersections agencées particulièrement, et ce, pour permettre l'injection d'une certaine quantité d'analytes dans le microcanal central. L'application d'un champ électrique dans ce même canal dit de séparation après la phase d'injection est responsable de la migration des analytes. En effet, sous l'effet d'un champ électrique, les particules chargées se déplacent dans un milieu liquide avec une vitesse définie à la fois par le champ, par la masse et la charge des particules (électrophorèse). La vitesse des particules dans le liquide est proportionnelle au champ électrique, la constante de proportionnalité étant nommée mobilité électrophorétique. A la paroi solide/liquide, une double couche ionique formée d'une couche d'ions fixe, correspondant à la charge de surface, et d'une couche d'ions mobile, correspondant à une couche diffuse dans le liquide, se forme spontanément. Sous un champ électrique, les ions de la couche mobile migrent, entraînant un mouvement global du liquide par viscosité (électro-osmose). Celui-ci se déplace d'un seul bloc et sa vitesse est aussi proportionnelle au champ électrique. La constante de proportionnalité entre la vitesse du fluide et le champ électrique est appelée mobilité électro-osmotique. L'action concomitante de la migration électrophorétique (vitesse des ions dans le liquide) et du flux de liquide électro-osmotique (vitesse du liquide) générés par la différence de potentiel agit sur les ions contenus dans le fluide, assurant leur transport à travers le canal de séparation. La vitesse totale d'un ion dans un microcanal soumis à un champ électrique est donc proportionnelle au champ électrique. La constante de proportionnalité est la mobilité totale de l'ion qui est la somme de sa mobilité électrophorétique (propre à chaque ion) et de la mobilité électro-osmotique (proportionnelle au potentiel de surface).

La détection des différents analytes peut se faire successivement dans le temps au niveau de l'extrémité du long microcanal et permet de connaître le nombre d'analytes présents dans la solution à analyser et leur concentration respective. Cette méthode est connue pour sa très bonne résolution à séparer deux analytes.

Il faut, pour obtenir une efficacité de séparation la plus élevée possible, contrôler le sens et l'amplitude du flux de liquide électro-osmotique (FEO). En effet, la résolution de cette technique est maximale lorsque le potentiel de surface est tel que la mobilité électro-osmotique est l'inverse de la mobilité électrophorétique moyenne des espèces à séparer (cf. Huang, L.R., The principles of separation in CE, Chromatographia supplément, 54 (9), p. 15-23).

De nombreux systèmes de préconcentrations nécessitent aussi le contrôle du paramètre de potentiel de surface. La demande de brevet N° FR2936316 consiste en une technique de préconcentration sélective qui se fonde sur la variation du paramètre de charge de surface (N.B. la charge de surface peut être ramenée à un potentiel de surface et vice et versa).

En nanofluidique, on sait aussi que la sélectivité du transport ionique dépend du potentiel de surface et la préconcentration d'un échantillon biologique à l'aide de telles structures nanométriques dépend essentiellement de ce paramètre (Plecis A., Nanteuil C., Haghiri-Gosnet A., Chen Y. "Electro-preconcentration with charge selective nanochannels", Analytical Chemistry 2008). Pour toutes ces raisons de nombreuses techniques ont été proposées et de nombreux brevets ont été déposés pour contrôler ce paramètre à l'aide d'un système de contrôle externe de type source de tension. Ces techniques sont connues sous le nom de « champ électrique radial » lorsqu'ils ont été appliquées à des systèmes de type capillaire, ou encore de transistors microfluidiques ou nanofluidiques lorsqu'elles ont été appliquées à des systèmes microfluidiques (par exemple par Schasfoort, R.B.M., et al., Field-effect flow control for microfabricated fluidic networks. Science, 1999 ou encore par Karnik, R, K. Castelino, and A. Majumdar, Field-effect control of protein transport in a nanofluidic transistor circuit. Applied Physics Letters, 2006). Nous allons maintenant détailler deux exemples de brevets qui s'inspirent de ces structures de types Métal/Isolant/Electrolytes (MIE) afin de contrôler le potentiel de surface (aussi généralement appelé potentiel « zêta »).

Ainsi la figure 1, issue du brevet US5151164, décrit un dispositif de séparation par électrophorèse capillaire d'analytes contenus dans un électrolyte, ce dispositif comportant deux réservoirs 1, 2 séparés par un capillaire 3. Ce capillaire 3 est en matériau non conducteur, par exemple en verre, en plastique ou en silice. Une première et une seconde d'électrodes 4,5 auxquelles est associé un générateur de tension 6, sont disposées respectivement d'un côté et de l'autre côté du microcanal 10 et sont aptes à générer, à l'intérieur de ce dernier, un premier champ électrique longitudinal. Une troisième électrode 7, disposée autour du capillaire 3 et sur pratiquement la totalité de sa longueur, est apte à générer, à l'intérieur de ce dernier, un champ électrique radial.

Le contrôle du sens et de l'amplitude du flux de liquide électro-osmotique est obtenu en contrôlant la tension appliquée aux extrémités de la troisième électrode 7. Une chute de potentiel électrique d'au moins 0,4 kV est appliquée au travers de cette électrode, permettant d'obtenir une différence de potentiel constante avec le liquide dans le capillaire 3 et ainsi de contrôler le potentiel de surface interne du capillaire.

Toutefois, cette forte chute de tension dans l'électrode externe provoque un effet Joule important et, pour éviter cet inconvénient, le brevet US5358618 propose l'utilisation d'une électrode de potentiel unique et positionnée sur une longueur restreinte du microcanal. Ce dispositif permet le contrôle du flux électroosmotique tout en limitant l'échauffement du liquide lié à l'effet joule.

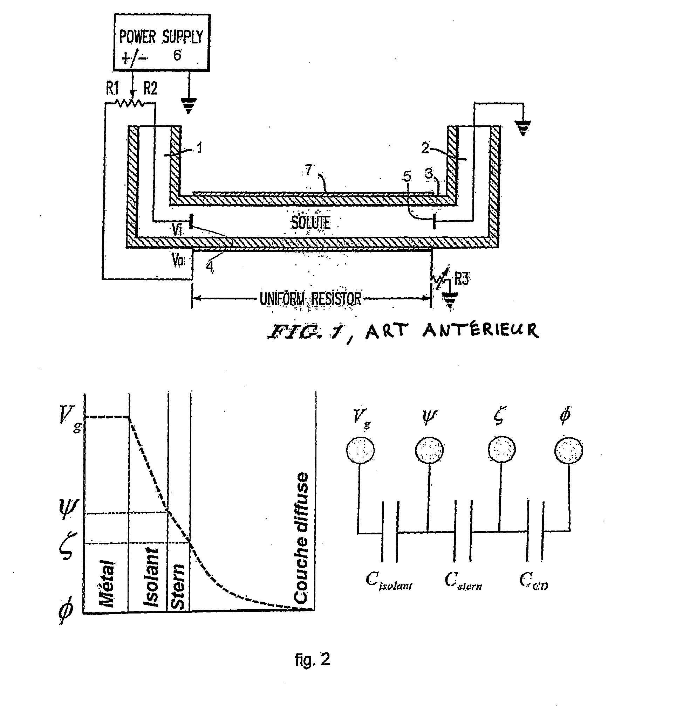

Si l'on se réfère aux autres microsystèmes dans lesquels le potentiel de surface est contrôlé à l'aide d'un potentiel radial, tous présentent cette même configuration dite « Métal-Isolant-Electrolyte » (MIE) qui consiste à isoler une électrode de l'électrolyte à l'aide d'une couche isolante et à appliquer un potentiel à cette électrode différent du potentiel de l'électrolyte afin de modifier, par effet capacitif, le potentiel de surface au niveau de l'isolant. La figure 2a montre l'évolution du potentiel électrique au travers d'une structure MIE entourant le microcanal. La figure 2b présente une modélisation électrique de ce type d'interfaces. *Vg* correspond au potentiel appliqué au niveau du métal, ψ au potentiel de Stern à la limite de l'isolant, ζ au potentiel zeta ( ou potentiel de surface au-delà de la couche d'ions adsorbés à la surface) et Φ au potentiel du liquide (au-delà de la couche de contre-ions, appelée couche diffuse. La décroissance du potentiel est linéaire dans l'isolant et la couche de Stern, alors que la décroissance est exponentielle dans la couche diffuse.

Si on néglige la capacité de la couche de Stern dont on ne connait pas *a priori* la valeur, on peut estimer la variation de potentiel de surface ζ qu'implique une surtension entre le liquide et l'électrode (*V*-Φ) :

$$\Delta \zeta = \frac{C_{isolant}}{C_{CD}}(V - \phi) = \frac{\lambda_D \varepsilon_{isolant}}{l_{isolant} \varepsilon_{liquide}}(V - \phi).$$

où $\lambda_D$ est l'épaisseur de la couche diffuse (longueur de Debye, cf. Hunter, « Zeta potentiel in colloids science », Academic press, London, 1981), $l_{isolant}$ est l'épaisseur de l'isolant, $\varepsilon_{isolant}$ et $\varepsilon_{liquide}$ désignent respectivement la permittivité électrique de l'isolant et de l'électrolyte. La variation de potentiel à l'interface liquide est donc proportionnelle à la différence de potentiel entre le liquide et l'électrode. Il y a trois principales difficultés avec ces interfaces :

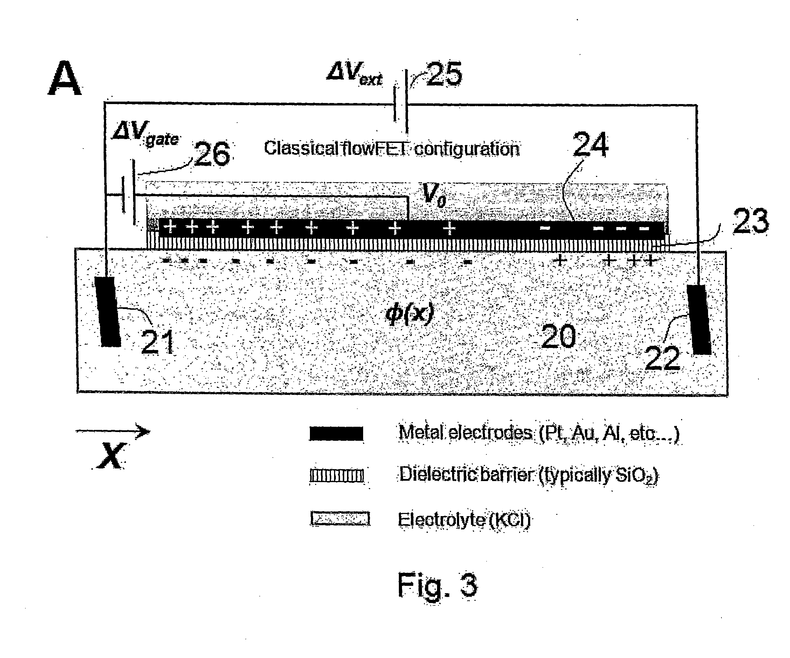

- la première réside dans le fait que le potentiel dans le liquide varie linéairement le long du microcanal. Le potentiel de surface induit n'est donc pas homogène le long du capillaire. Ce phénomène est illustré par la figure 3 où un canal 20 comporte une première électrode 21 à l'une de ses extrémités et une seconde électrode 22 à son autre extrémité, ces électrodes étant reliées à des moyens 25 de génération et de contrôle d'une tension entre-elles. Un matériau non conducteur 23 est disposé sur une partie de la face externe du canal et une troisième électrode 24 lui est connectée. Des moyens 26 de génération et de contrôle d'une tension sont associés à cette troisième électrode. L'inhomogénéité du potentiel de surface est représenté par les signes - et + au dessous du matériau non conducteur 23.

- la seconde limitation vient du facteur de proportionnalité entre la tension externe appliquée et la différence de potentiel de surface générée. Ce facteur est généralement très petit et tend même vers zéro quand la concentration ionique augmente (il est proportionnel à la longueur de Debye). Ainsi pour une solution de 10 mM, et une couche isolante de type $SiO_2$ (2 μm d'épaisseur), il faut appliquer une différence de tension de l'ordre de 100 V pour obtenir une variation de seulement 10 mV à l'interface. Sachant que la rigidité diélectrique du verre ne permet pas d'appliquer des champs électriques supérieurs à 8 MV/m en moyenne, pour une couche de 2 μm d'épaisseur, la tension maximale admissible avant claquage sera *a priori* de 16 V, donc un contrôle du potentiel de surface maximal de 1.6 mV seulement.

La troisième difficulté, enfin, est liée à la quasi impossibilité technologique de réaliser, à l'aide des technologies de microfabrication actuelles, une couche fine réellement isolante en milieux liquide. En effet, la moindre imperfection dans cette couche résulte en un important courant faradique entre l'électrode métallique et le liquide, qui vient perturber la valeur du potentiel électrique de l'électrolyte. Ce cas de figure est évidemment à proscrire lors des étapes de séparation, fractionnement ou préconcentration de type électrophorétique.

Par ailleurs, un dispositif selon les brevets US5151164 et US5358618 et tout dispositif d'électrophorèse capillaire classique présente aussi l'inconvénient de devenir non fonctionnel lorsqu'une bulle, liée par exemple à l'effet joule, se crée au sein du microcanal. Dans ce cas, la bulle joue le rôle d'isolant électrique et aucun courant électrique ne peut être établi dans le capillaire ce qui a pour conséquence de « stopper » tout flux électro-osmotique.

Pour résoudre cet inconvénient, le brevet WO00/60341 propose d'utiliser un microcanal cylindrique dont toute la face interne est recouverte par un revêtement résistif comme un polymère semi-conducteur (polyanailine, polypyrrole,...), et de connecter les extrémités de ce revêtement à une source de tension qui permet aussi d'imposer le champ électrique dans la partie liquide. Dans ce cas de figure, l'interface résistive permet de conduire le courant malgré la présence d'une bulle et cette dernière peut être transportée par le flux électro-osmotique. Ce type de dispositif, même s'il permet de résoudre le problème des bulles au sein des dispositifs capillaires ne permet cependant pas de contrôler correctement la mobilité de surface. Un autre dispositif est connu d'EP1326827.

En effet, les techniques de microfabrication classiques ne peuvent pas s'appliquer à ce type de systèmes et recouvrir de façon homogène toute la face interne d'un microcanal cylindrique est extrêmement difficile voire impossible à réaliser avec des matériaux solides. On utilise alors des techniques de recouvrement fondé sur l'injection hydrodynamique de solutions de polymères qui se déposent de manière passive à l'intérieur du capillaire. Ce type de technique ne permet pas d'obtenir une homogénéité suffisante pour la conductivité surfacique et ne permet pas l'intégration de matériaux solides fortement conducteurs. De plus, il est impossible de connecter la couche résistive en d'autres points que les extrémités du capillaire. Le contrôle du potentiel électrique dans cette couche résistive en est donc fortement limité.

Ensuite, l'utilisation des polymères susmentionnés est conditionnée par des courants faradiques importants entre le milieu liquide et la couche résistive. Ce transfert électronique entre le liquide et la couche résistive est indispensable dans le cadre de l'application décrite et qui consiste à utiliser la couche résistive comme « court circuit » lors de la formation d'une bulle dans la partie liquide du capillaire. Ce caractère implique une polarisabilité minimale à l'interface solide-liquide. De plus les faibles conductivités mentionnées pour la couche résistive impliquent que la différence de potentiel entre le liquide et la couche résistive ne peut être maintenue le long du microcanal. Le but de l'invention est de proposer un dispositif microfluidique permettant de pallier les inconvénients des dispositifs décrits précédemment en proposant un dispositif microfluidique. de séparation ou de fractionnement ou de préconcentration d'analytes contenus dans un électrolyte comportant au moins deux réservoirs séparés par au moins un microcanal et/ ou nanocanal planaire, dispositif caractérisé en ce que ledit au moins un microcanal et/ ou nanocanal a une géométrie planaire et en ce que au moins une partie de la paroi du microcanal supérieure et/ou inférieure est constituée et/ou recouverte intérieurement d'un matériau ou groupe de matériaux conducteur et polarisable constituant une interface ou un réseau d'interfaces polarisables et en ce qu'au moins une électrode ou au moins un réseau d'électrodes est connecté en au moins un point du matériau ou groupe de matériaux polarisables, la conductance électrique surfacique dudit matériau ou groupe de matériau conducteur et polarisable étant au moins égale à 100 nS, sa fenêtre de polarisabilité vis-à des réactions d'oxydo-réduction impliquant l'eau, les ions OH- et H+ , d'au moins 0,5V pour les réactions cathodiques et anodiques et présentant un courant faradique inférieur à 50 $\mu$A/cm$^2$ sur cette fenêtre de polarisabilité d'au moins 1V au contact d'un liquide aqueux tel qu'une solution de KCl 0.1 M à pH7.

Ainsi, l'interface polarisable est directement en contact avec le liquide pouvant circuler à l'intérieur du microcanal et la maîtrise de son potentiel électrique peut être réalisée en tout point de l'interface ce qui permet, outre le contrôle fin du potentiel de surface, de quasiment supprimer les courants faradiques. En outre, avec une telle géométrie, par exemple rectangulaire, il est possible de contrôler indépendamment le potentiel de surface sur deux faces internes opposées, et/ou sur des portions longitudinales distinctes d'un même réseau micro/nanofluidiques.

Par conducteur, il faut entendre que la couche mince présente une conductivité électrique surfacique au moins supérieure à 100 nS.

Par géométrie planaire, il faut entendre que la section du microcanal est de forme polyhédrale.

Par conductance électrique surfacique (exprimée en S), il faut entendre le produit de la conductance volumique (exprimée en S/m) et de la hauteur de la couche structurée (exprimée en m).

Par interface polarisable, on entend tout matériau ou groupe de matériaux conducteur qui présente un très faible courant faradique lorsque l'on lui applique une surtension comprise dans une fenêtre de polarisabilité vis-à des réactions d'oxydo-réduction impliquant l'eau, les ions OH- et H+, c'est-à-dire tant que la surtension /V-Φ/<V0, où V est le potentiel dans l'interface polarisable, Φ est le potentiel d'équilibre de l'électrode avec l'électrolyte et VO la surtension faradique associée au couple matériau-électrolyte. Cette fenêtre de polarisabilité du matériau vis-à des réactions d'oxydo-réduction impliquant l'eau, les ions OH- et H+, doit être d'au moins 1 Volt avec au moins + ou - 500mV de part et d'autre du potentiel d'équilibre de l'interface, pour que le contrôle du potentiel de surface puisse être réalisé de manière significative et doit présenter sur l'ensemble de cette fenêtre un courant faradique inférieur à 50 microAmpère par centimètre carré pour une solution de KCl 0.1M à pH7. En d'autres termes, la fenêtre de polarisabilité du matériau vis-à des réactions d'oxydo-réduction impliquant l'eau, les ions OH- et H+ est d'au moins 0,5V pour les réactions cathodiques et anodiques et présentant un courant faradique inférieur à 50 $\mu$A/cm$^2$ sur cette fenêtre de polarisabilité d'au moins 1V (0,5V + 0,5V) au contact d'un liquide aqueux tel qu'une solution de KCl 0.1 M à pH7.

Parmi les matériaux polarisables répondant à cette définition, on compte plus particulièrement le SiC conducteur tel que SiCxHy avec x≠1 et y≠0, le CNx, le CNxHy, le carbone pure, le diamant dopé. Par groupe de matériaux, il faut entendre tout empilement ou mélange de ces matériaux.

Selon une caractéristique particulière, ledit microcanal comporte n parois, avec n>2 et au plus n-1 parois est recouverte ou constituée par un matériau ou groupe de matériaux conducteur et polarisable constituant une interface ou un réseau d'interfaces polarisables.

Selon une caractéristique complémentaire permettant de contrôler la valeur absolue du potentiel zêta, un dispositif selon l'invention comporte au moins une électrode dite de référence constituée préférentiellement d'une partie du réseau d'interface polarisable non connexe à ce réseau et connecté en au moins un point à une électrode non connexe au reste du réseau d'électrode. Cette électrode est apte à mesurer le potentiel électrique de l'électrolyte en un point du réseau microfluidique et permet de contrôler le potentiel zeta de manière absolue au niveau de l'interface polarisable. Le système compte autant d'électrodes de référence que nécessaire. Par exemple, lorsque le potentiel doit être contrôlé le long d'une section rectiligne, une seconde électrode dite de référence apte à mesurer le potentiel au niveau de l'autre côté dudit microcanal sera préférablement utilisée. En général, et dans la mesure où le potentiel exacte du liquide ne sera pas connu, une électrode de référence sera préférablement associée à toute électrode permettant d'imposer le potentiel à l'interface polarisable. Afin d'éviter tout courant faradique perturbateur au niveau des électrodes de référence, il sera préférable d'associer à chaque électrode dite de référence un moyen électrique dit « suiveur en tension » capable de fournir un courant pour un potentiel identique à celui de l'électrode de référence tout en garantissant un courant minimal au niveau de l'électrode de référence.

Selon une caractéristique additionnelle un dispositif selon l'invention comporte au moins une première et une seconde électrodes dite de champ longitudinal auxquelles sont associées un générateur de tension, ces électrodes étant disposées respectivement d'un côté et de l'autre côté d'au moins un microcanal recouvert de ladite interface polarisable et étant aptes à générer, à l'intérieur de ce dernier, un champ électrique longitudinal dans le liquide. Ces électrodes peuvent par exemple être soit des électrodes macroscopiques placées dans les réservoirs, soit des micro-électrodes placées dans le réseau fluidique.

Selon une autre caractéristique, un dispositif selon l'invention comporte au moins des premiers moyens de génération d'une surpression au niveau de l'un au moins des réservoirs, ces moyens étant préférablement aussi aptes à contrôler la valeur de cette surpression. Ainsi, cette surpression est apte à mettre en mouvement un fluide contenu dans le réseau microfluidique à l'aide d'un gradient de pression. Le potentiel électrique imposé à l'interface polarisable pourra par exemple dans ce cas être imposé à partir du potentiel mesuré à l'aide d'une électrode dite de référence.

Avec un tel dispositif, le potentiel de surface peut être contrôlé sur au moins une partie du système microfluidique et ce de manière homogène, ou si l'application le nécessite de manière non homogène.

L'invention concerne aussi un procédé de séparation ou de fractionnement ou de préconcentration d'analytes contenus dans un électrolyte mis en oeuvre par un dispositif selon l'invention et comportant les étapes suivantes :

- remplir au moins un réservoir avec un électrolyte et un échantillon à analyser comportant les analytes,
- appliquer au moins une différence de potentiel entre au moins une électrode longitudinale ou de référence et au moins une électrode de contrôle connectée en un point du réseau polarisable,
- appliquer au moins une différence de potentiel au niveau des électrodes longitudinales et/ou une différence de pression au niveau des réservoirs,
- détecter, à l'aide d'un détecteur, la présence d'analytes au niveau d'au moins un point du réseau microfluidique.

Selon une caractéristique supplémentaire, un procédé selon l'invention comporte en outre au moins l'une des étapes suivantes :

- faire varier la différence de potentiel de contrôle de manière continue ou séquentielle
- faire varier la différence de potentiel électrique ou de pression de manière continue ou séquentielle

D'autres avantages et caractéristiques apparaîtront dans la description de modes particuliers de réalisation de l'invention au regard des figures annexées parmi lesquelles :

Les figures 4a à 4c présentent un schéma d'un exemple de réalisation d'un dispositif selon un premier mode de réalisation de l'invention.
La figure 5 montre un schéma de principe illustrant, au niveau d'une interface polarisable, le potentiel de surface dans le cadre d'un dispositif selon l'invention.
La figure 6 représente, pour un matériau polarisable, l'évolution du courant faradique en fonction de la surtension qui lui est appliquée.
Les figures 7a et 7b montre un exemple de fabrication d'une deuxième variante de réalisation de l'invention dite en « pont de wheatstone microfluidique ».
La figure 8 montre un exemple de montage électrique externe associé au dispositif de la figure 7 et nécessitant une première, une seconde et une troisième sources de tensions externes.
Les figures 9a, 9b et 9c présente différents paramètres, à savoir la géométrie, la distribution des potentiels électriques et la distribution des courants électriques, mesurés à partir d'un dispositif selon la figure 7.
La figure 10 montre l'allure de la surtension le long du microcanal pour une longueur de contrôle faible par rapport à la longueur du canal pour un dispositif selon la figure 7.
La figure 11 représente l'évolution typique de la longueur de contrôle en fonction de la concentration ionique dans l'électrolyte et de la conductivité de l'interface pour des interfaces en SiC conducteur, en l'occurrence en SiCxHy et en CNx.

Les figures 12a à 12d représentent de manière schématique le potentiel qui se développe respectivement dans le liquide et dans l'interface d'une pour une longueur de contrôle inférieure à la longueur totale du canal et pour trois types de régimes différents et d'autre part pour une longueur de contrôle supérieure à la longueur totale du canal.

La figure 13 montre l'allure de la surtension obtenue le long du microcanal de la figure 7 quand la résistance de transfert est augmentée.

La figure 14 montre un exemple de contrôle obtenu pour des surtensions invérieures à 2 V en valeur absolue pour une interface de SiCxHy et un électrolyte composé de KCl (1 mM).

La figure 15. montre un exemple de contrôle où χ=17.6 % pour une interface de CNx et un électrolyte de KCl (10 μM).

La figure 16a présente l'agencement d'une interface polarisable et de son réseau associé d'électrodes avec un microcanal selon un troisième mode de réalisation de l'invention.

La figure 17 montre l'agencement d'une interface polarisable principale et de deux interfaces polarisables secondaires utilisées comme électrodes de référence dans le cadre d'un quatrième mode de réalisation de l'invention.

La figure 18 présente l'agencement d'une interface polarisable principale et de deux interfaces polarisabes secondaires selon un cinquième mode de réalisation.

La figure 19 représente un exemple d'application d'un dispositif selon l'invention à une colonne de séparation électrophorétique dans un système de séparation en puce de géométrie connue.

La figure 20 présente un exemple d'application d'un dispositif selon l'invention comme porte électrophorétique.

La figure 21 explicite le processus de séparation d'analytes contenus dans un électrolyte avec une porte électrophorétique selon la figure 20.

La figure 22 donne un exemple de concentration des espèces présentes dans un échantillon biologique en fonction de leur mobilité électrophorétique.

Les figures 23a et 23b montrent l'évolution du flux en fonction de la différence de mobilité $\Delta\mu$ par rapport à la mobilité de coupure pour un canal de longueur 1 mm

Les figures 24a et 24b présentent l'association de deux portes électrophorétiques disposées respectivement en série et en parallèle.

Les figures 25a à 25c montrent des schéma simplifiés de systèmes complexes à portes électrophorétiques selon l'invention.

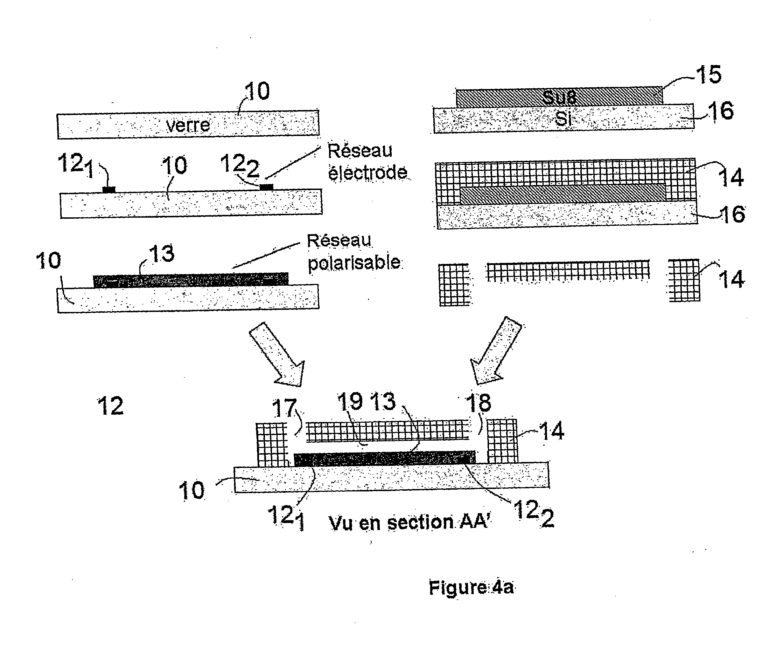

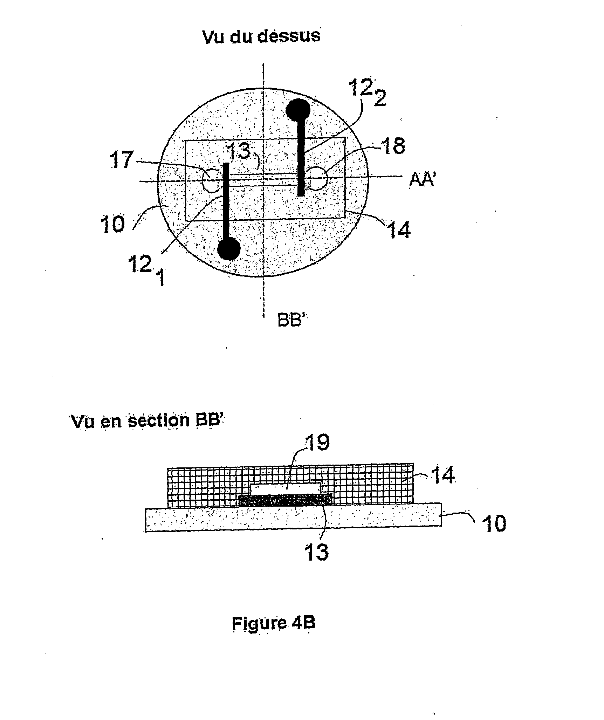

Les figure 4A et 4B illustrent un premier mode de réalisation de l'invention comportant une interface polarisable située sur la partie inférieure d'un microcanal rectangulaire réalisé entre deux réservoirs à l'aide d'une technique standard dite « Verre-PDMS ».La Figure 4A illustre plus précisément un schéma des étapes de microstructurations pouvant être associées à la réalisation du premier mode de réalisation. Le dispositif est constitué d'un substrat de verre 10 de 500 μm d'épaisseur sur lequel sont successivement structurés un réseau d'électrodes métalliques 12 (Ti/Pt - épaisseurs 5nm/50nm) puis un réseau polarisable 13, ici de géométrie rectangulaire en SiC conducteur, en l'occurrence en SiCxHy (épaisseur 100 nm). Le réseau d'électrodes est structuré à l'aide d'une technique standard de « lift-off » constituée d'une étape photolithographique utilisant une résine inversible de type AZ5214 - Dow Corning, d'une étape de dépôt métallique par évaporation et d'une étape de révélation pendant laquelle le substrat est plongé dans l'acétone, la dissolution de la résine libérant le métal déposé sur cette dernière tandis que les régions sans résine conservent la couche métallique ainsi structurée. Le réseau polarisable est réalisé à l'aide d'une étape de déposition par pulvérisation cathodique radiofréquence magnétron d'une cible de SiC cristallin conducteur, en l'occurrence en SiCxHy, suivi d'une étape photolithographique utilisant une résine inversible de type AZ-5214 qui permet de masquer le motif à réaliser pendant l'étape suivante de gravure par plasma fluoré. La résine est ensuite dissoute dans l'acétone pour obtenir le substrat inférieur complètement structuré.

Les microcanaux sont réalisé dans un bloc de polydimethylsiloxane (PDMS) 14 à l'aide d'une technique de moulage décrite notamment par Mc Donald (McDonald, J.C. and G.M. Whitesides, Poly(dimethylsiloxane) as a material for fabricating microfluidic devices. Accounts of Chemical Research, 2002. 35(7): p. 491-499). On utilise ici une résine photosensible (SU8) 15 pour réaliser sur un substrat de silicium 16 le réseau microfluidique en « négatif ». Une étape de moulage consiste ensuite à verser sur ce moule du PDMS liquide (polymère de base + réticulant), puis à le faire réticuler à température ambiante ou à une température de l'ordre de 75 °C pour accélérer l'étape de réticulation, puis à séparer le réseau microfluidique ainsi moulé dans le PDMS du moule original. Après avoir percé à l'aide d'un emporte pièce les réservoirs 17, 18 dans le bloc de PDMS, on expose le substrat inférieur et le bloc de PDMS à un plasma oxygène court (typiquement 30 s) pour activer les groupes de surfaces. Lorsque les deux surfaces sont mises en contact (après alignement), un collage covalent s'opère entre elles et le réseau microfluidique est ainsi finalisé.

On obtient ainsi un microcanal 19 de section rectangulaire dont une seule face interne 20 est constituée d'un réseau polarisable (Figure 4B). Les électrodes métalliques $12_1$, $12_2$ permettent d'imposer un potentiel électrique à chaque extrémité de l'interface polarisable. Pour cela une source de potentiel électrique 21 est connectée aux « zones de connections » du réseau d'électrodes situées en dehors du réseau microfluidique. Afin que la chute de potentiel soit minimale dans le réseau d'électrodes, il est important de conserver un rapport de conductivité surfacique entre le réseau d'électrodes et le réseau d'interfaces polarisables suffisant (au moins >10 et préférablement de l'ordre de 1000).

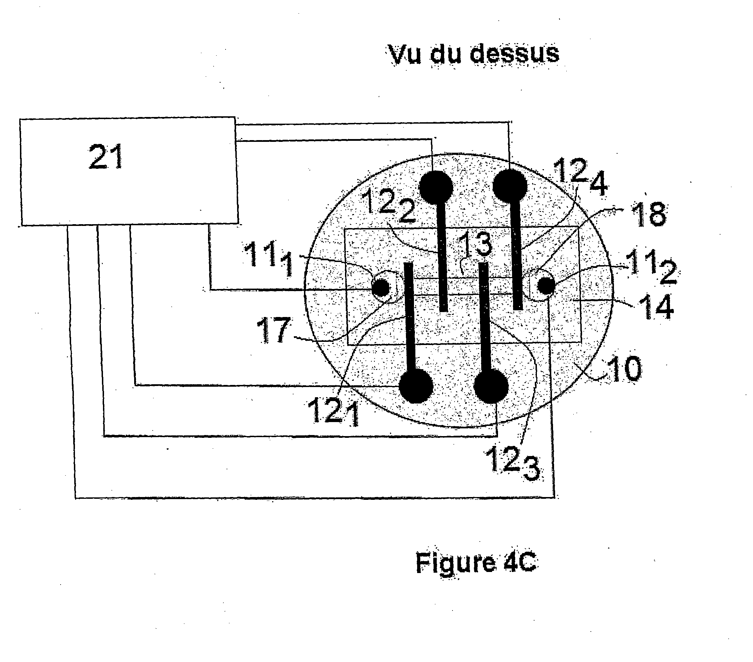

La figure 4C montre un second mode de réalisation équivalent à celui de des figures 4A et 4B dans lequel plusieurs électrodes de contrôles $12_1$, $12_2$, $12_3$, $12_4$ sont connectées à l'interface polarisable. On y représente aussi la source de tension multiple 21 qui permet de contrôler le potentiel de l'interface en ces différents points de contact. La source de tension multiple est de plus connectée à deux électrodes $11_1$, $11_2$ de platine macroscopiques placées dans les réservoirs 17, 18 et permettant de contrôler le potentiel du liquide.

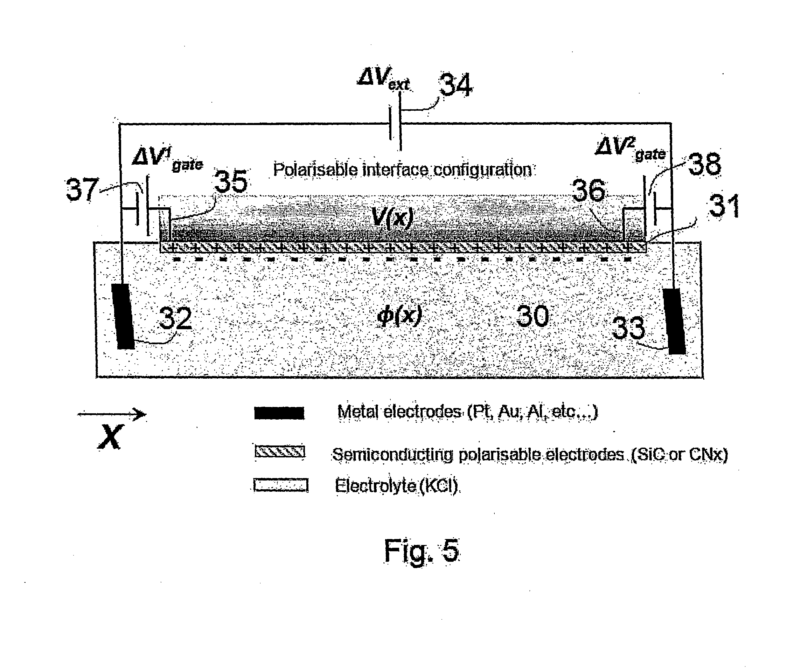

La figure 5 montre un schéma de principe illustrant, au niveau d'une interface polarisable, le potentiel de surface dans le cadre d'un dispositif selon l'invention. Cette figure correspond au mode de réalisation décrit dans les figures 4A et 4B et est à comparer au schéma de principe des dispositifs de type MIE de la figure 3. Ce dispositif comporte un canal 30 de section rectangulaire dont l'une des parois est constituée par une interface polarisable 31. Une première électrode 32 est disposée à l'une des extrémités du microcanal et une seconde électrode 33 est disposée à son autre extrémité, ces électrodes étant reliées à des moyens 34 de génération et de contrôle d'une différence de tension entre-elles. Une troisième électrode 35 est disposée à l'une des extrémités de l'interface polarisable 32 et une quatrième électrode 36 est disposée à son autre extrémité, ces électrodes étant reliées à des moyens 37, 38 de génération et de contrôle d'une différence de tension entre-elles.

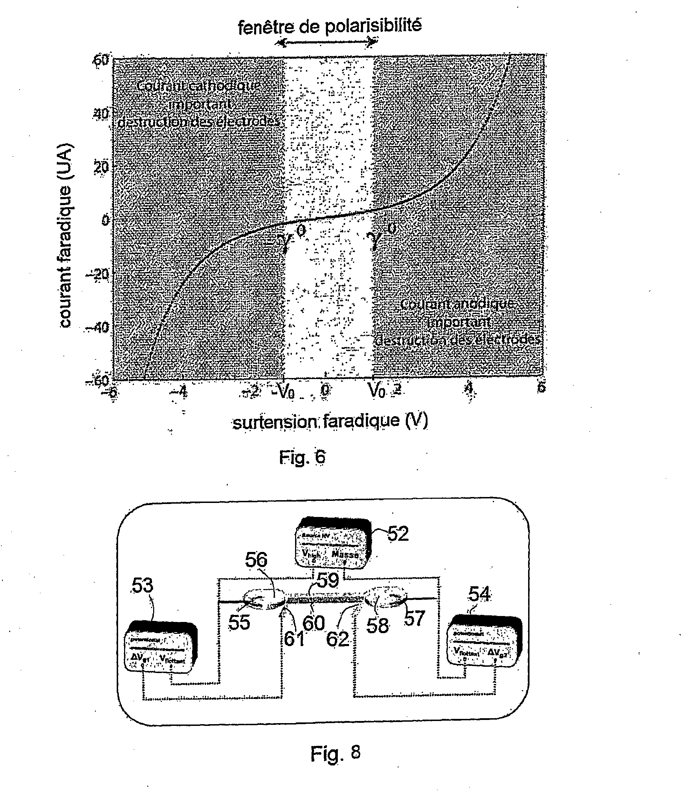

Comme mentionné précédemment, cette interface polarisable présente un très faible courant faradique lorsque l'on lui applique une surtension comprise dans une fenêtre de polarisabilité, c'est-à-dire tant que /V-Φ/<$V_0$ ,où V est le potentiel dans l'interface polarisable, Φ est le potentiel du liquide en contact avec cette interface. et $V_0$ la surtension au dessus de laquelle le courant faradique croit rapidement comme montré sur la figure 6.

Dans cette configuration, il faut donc prendre garde à imposer un potentiel électrique à l'interface tel que la surtension faradique reste dans le domaine de polarisabilité et ce, en tout point de l'interface. Dans le cas de ce microcanal rectiligne 30 rempli d'un électrolyte au travers duquel est imposée une chute de potentiel importante, il est alors indispensable d'assurer aussi une chute de potentiel au travers de l'interface polarisable. Ceci n'est possible qu'à condition de pouvoir imposer le potentiel de l'interface aux deux extrémités du canal, ce qui est réalisé à l'aide des troisième et quatrième électrodes 35, 36 et des moyens 37, 38 associés.

En imposant par exemple une surtension équivalente aux deux extrémités, et dans le cas d'une interface idéalement polarisable (courant entre le liquide et l'interface négligeable), cette surtension sera constante tout le long du canal. Cette configuration permet d'obtenir alors une couche diffuse et une mobilité électroosmotique constante le long du microcanal. De plus, la variation du potentiel de surface n'est plus limitée par la couche isolante si bien qu'on retrouve, toujours dans le cas d'une capacité de la couche de Stern négligeable, une stricte égalité entre la variation de potentiel de surface et la surtension :

$$\Delta \zeta(x) = \gamma(x) = V(x) - \phi(x)$$

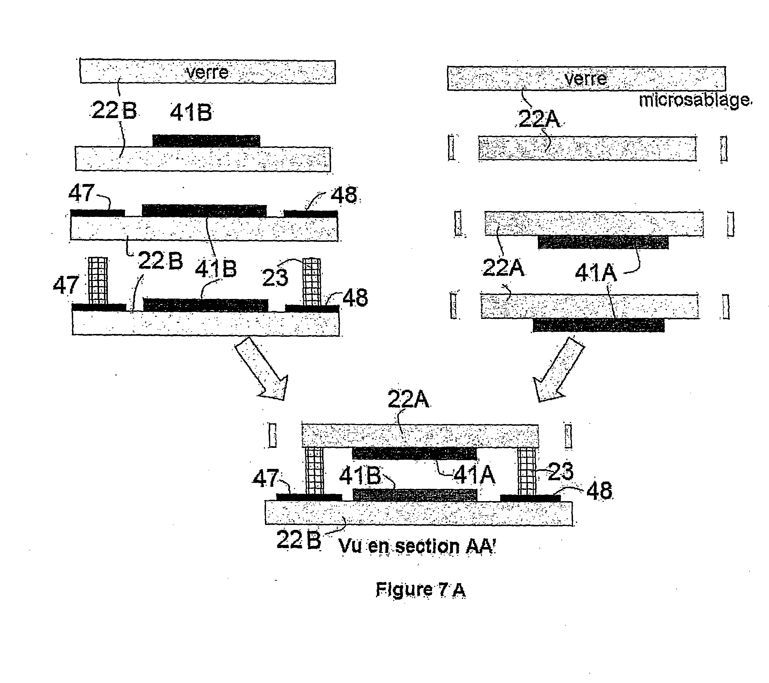

La figure 7A présente une technique de microfabrication permettant de réaliser un réseau microfluidique selon l'invention dans lequel une partie seulement du réseau est sujet à un contrôle du potentiel de surface à l'aide d'interfaces polarisables. Cette technique dite « Verre-PDMS-Verre est décrite notamment dans la référence suivante : Plecis, A. and Y. Chen, Fabrication of microfluidic devices based on glass-PDMS-glass technology. Microelectronic Engineering, 2007. 84(5-8): p. 1265-1269. Ici, on utilise deux substrats rigides pour définir les parois supérieure et inférieure du réseau microfluidique. Le substrat supérieur est tout d'abord percé à l'aide d'une technique de microsablage pour permettre l'accès au réseau fluidique ainsi qu'aux éventuelles zones de connexion avec le réseau d'électrodes.

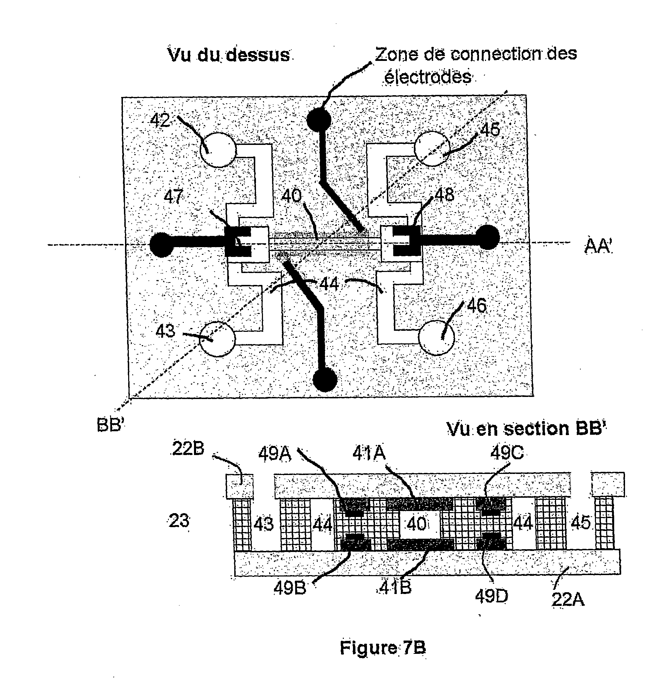

Un matériau polarisable 41A, 41B (SiC conducteur ou CNx) est d'abord structuré sur les substrats de verre supérieurs $22_1$ et inférieurs $22_2$ par des techniques de dépositions/ gravure ou « lift-off » classiques décrit notamment dans la figure 4A. Dans un deuxième temps, un réseau d'électrodes métalliques est aligné sur ces interfaces. Comme montré sur la figure 7B qui représente un dispositif selon un mode de réalisation de l'invention dit en « pont de wheatstone microfluidique » qui utilise la technique décrite en 7A, ce réseau comprend : (i) des électrodes en courant 47, 48 permettant d'imposer un certain potentiel électrique au liquide (seulement sur le substrat inférieur) ; (ii) les électrodes de contrôle 49A, 49B, 49C, 49D permettant d'imposer le potentiel électrique à l'interface polarisable. Le réseau microfluidique est ensuite réalisé à l'aide d'une étape de moulage qui permet de structurer une couche de PDMS 23 de faible hauteur (typiquement 5 à 10 μm). Il est aussi possible d'utiliser une résine silicone photosensible (par exemple WL-5150 Dow-corning) pour réaliser le réseau fluidique. Les dimensions typiques pour le canal central 40 sont par exemple 4 250 μm de longueur et 300 μm de largeur. Les substrats supérieurs et inférieurs sont ensuite collés après alignement ce qui permet d'obtenir un microcanal 40 dont plus de 95 % de sa surface interne est constituée d'un réseau polarisable dont on peut contrôler le potentiel de surface.

Ainsi, ce dispositif constituant une puce, comporte un microcanal 40 de section rectangulaire dont les parois supérieures et inférieures sont constituées par une interface polarisable respectivement 41A et 41B. L'une des extrémités de ce microcanal est reliée à deux réservoirs 42, 43 via des canaux de raccordement 44 tandis que l'autre extrémité du canal est reliée à deux réservoirs 45, 46 via des canaux de raccordement 44. Une première électrode 47 est disposée à l'une des extrémités du microcanal et une seconde électrode 48 est disposée à son autre extrémité, ces électrodes étant réalisées sur le substrat inférieur 22B et reliées à des moyens externes non représentés de génération et de contrôle d'une différence de tension entre-elles et apte à générer un champ électrique longitudinal aussi appelé transverse à travers le microcanal central 40. Deux électrodes 49A et 49B sont connectées respectivement à l'extrémité gauche de l'interface polarisable sur le substrat inférieur et supérieur 41A et 41B. Deux autres électrodes 49C et 49D sont connectées respectivement à l'extrémité droite de l'interface polarisable sur le respectivement sur les substrats supérieur et inférieur 22A et 22B . Ces couples d'électrodes 49 A et 49B, d'une part et 49C et 49D d'autre part étant connectées à des moyens externes non représentés, de génération et de contrôle d'un potentiel électrique.

Ce type de dispositif permet de mesurer le flux électroosmotique et donc le potentiel de surface en présence d'un champ électrique à travers le microcanal 40 situé au centre d'une structure en « H », les réservoirs se situant au extrémités libres des branches du H. Le principe de mesure du flux électroosmotique est notamment décrit dans : Plecis A., Chen Y. "Microfluidic analogy of the wheatstone bridge for systematic investigations of electroosmotic flows". Analytical Chemistry 2008, 80(10), 3736-42. Sa fonction est d'étudier les propriétés des interfaces polarisables et de valider la réalisabilité de ces dispositifs.

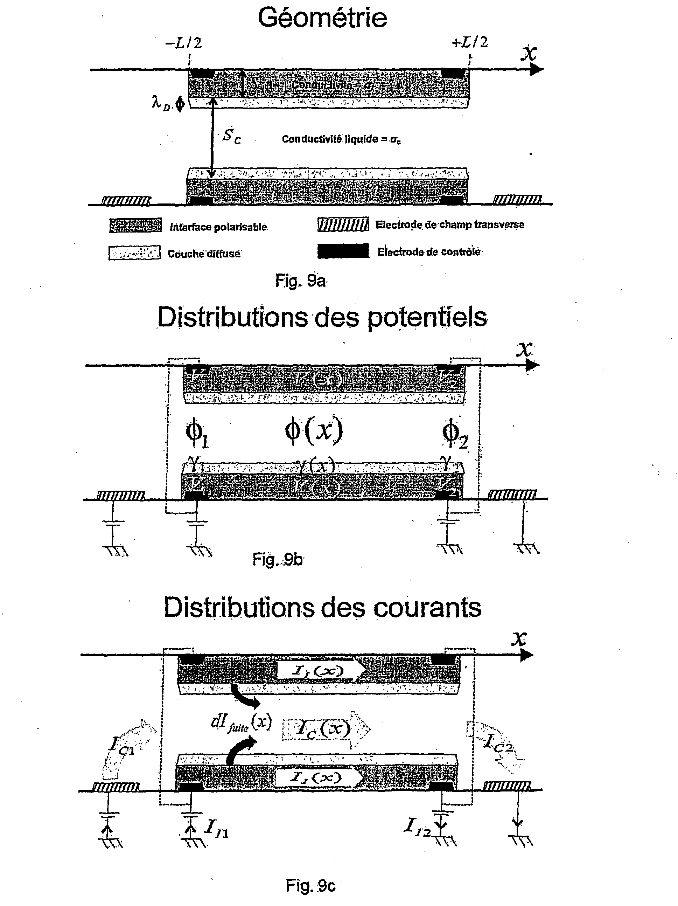

La figure 8 montre un exemple de montage électrique externe associé au dispositif de la figure 7 et nécessitant une première, une seconde et une troisième sources 52, 53, 54 de tensions externes. La première source 52 est connectée à une première électrode 55 disposée dans un premier réservoir 56 et à une seconde électrodes 57 disposé dans un second réservoir 58, ces réservoir étant séparée par un microcanal 59 dont deux parois parallèles sont chacune constituées par une interface polarisable 60 dont l'une des extrémités est connectée à une troisième électrode 61 et l'autre extrémité est connectée à une quatrième électrode 62. Cette première source est apte à contrôler le potentiel dans le liquide contenu dans les réservoirs et le microcanal , alors que les seconde et troisième sources 53 et 54 sont aptes à contrôler le potentiel électrique dans l'interface polarisable 60, relativement au potentiel dans le liquide. Dans cette configuration, les différents paramètres, à savoir la géométrie, la distribution des potentiels électriques et la distribution des courants électriques sont présentés respectivements sur les figures 9a, 9b et 9c.

On s'intéresse ici à la surtension $\gamma$ = V - $\Phi$ se développant le long du canal. C'est elle en effet qui renseigne sur le potentiel de surface local. Si aucun courant ne se développe à l'interface ( cas d'une interface idéalement polarisable), les courants électriques $I_I$ dans le matériau polarisable et $I_C$ dans le canal restent constants tout au long du microcanal. Il résulte alors de la loi d'Ohm une variation linéaire du potentiel dans ces deux milieux présentant une conductivité $\sigma_I$ et $\sigma_C$ et une section $S_I$ et $S_C$ pour respectivement le matériau polarisable et pour le canal :

$$I_C = -\sigma_C S_C \frac{\partial \Phi}{\partial x}$$

$$I_I = -\sigma_I S_I \frac{\partial V}{\partial x}$$

Dans ce cas idéalement polarisable, la surtension présente une variation linéaire le long du canal (différence de deux potentiels linéaires) et si les surtensions appliquées aux deux extrémités sont équivalentes ($\gamma_1$ = $\gamma_2$), cette surtension est constante le long du microcanal Figure 9-d).

En revanche, si le courant à l'interface n'est plus négligeable, les électrons présents en solution (respectivement dans l'interface) vont pouvoir franchir l'interface pour rejoindre un potentiel électrique plus faible. Leur arrivée massive ou au contraire leur départ aura pour conséquence de modifier le courant dans chaque « veine » électrique et les potentiels V et $\Phi$ ne présenteront alors plus une variation linéaire. Nous allons maintenant présenter l'allure de cette surtension quand le courant de fuite n'est plus négligeable.

Dans le cas d'un courant faradique non négligeable, on modélise ce courant d'échange et son influence par trois équations dont deux décrivent la conservation du courant. La troisième équation correspond à la dynamique de transfert électronique en fonction de la surtension. C'est ici une cinétique de transfert de type Tafel symétrique qui a été choisie pour décrire qualitativement le système :

$$dI_{fulte} = \frac{\partial I_C}{\partial x}$$

$$dI_{fulte} = -\frac{\partial I_I}{\partial x}$$

$$dI_{fuite} = I_0 \sinh\left(\frac{V-\Phi}{\gamma_0}\right) \approx I_0 \sinh\left(\frac{\gamma}{\gamma_0}\right)$$

En combinant les équations précédentes et les équation de chute Ohmique, on obtient ainsi la relation qui régit la surtension dans ce système :

$$\frac{\partial^2(\gamma')}{\partial x^2} \approx \frac{1}{L_\gamma^2} \sinh(\gamma')$$

$$\gamma' = \frac{\gamma}{\gamma_0} \quad ; \quad L_r^2 = \left(\frac{1}{S_c \sigma_c} + \frac{1}{S_l \sigma_l}\right)\frac{I_0}{\gamma_0}$$

où y' est la surtension adimensionnelle (rapportée à la surtension faradique $\gamma_0$) et $L_\gamma$ est un paramètre qui a la dimension d'une longueur.

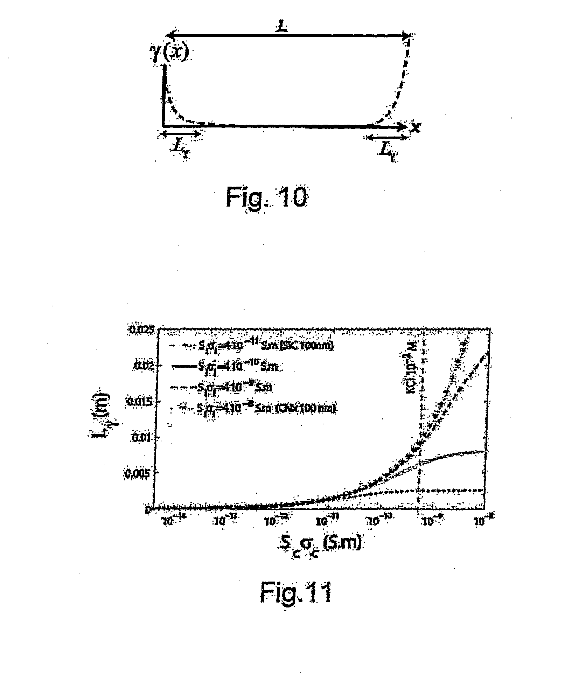

La figure 10 montre l'allure de la surtension le long du microcanal 60 pour une longueur de contrôle faible par rapport à la longueur du canal pour un dispositif selon la Figure 8.

Lorsque cette longueur typique est plus faible que la longueur totale du microcanal, alors la surtension tend à s'annuler au centre de la structure, et ce, quelle que soit la surtension imposée aux bornes du système. Il faut donc maximiser cette longueur de contrôle pour optimiser le contrôle du potentiel de surface dans un tel système.

On peut extraire de l'équation précédente l'expression de la longueur de contrôle $L_\gamma$ :

$$L_\gamma = \sqrt{\frac{\gamma_0}{I_0\left(\frac{1}{S_l \sigma_l} + \frac{1}{S_c \sigma_c}\right)}} = \sqrt{\frac{R_l}{(R_l + R_C)}}$$

$$R_l = \frac{\gamma_0}{I_0} ; R_l = \frac{1}{S_l \sigma_l} ; R_C = \frac{1}{S_C \sigma_C}$$

On voit ici que cette longueur dépend du rapport entre la résistance de transfert à l'interface $R_t$ (qui impose l'amplitude du courant faradique) et la somme des résistances transverses associées au matériau polarisable $R_l$ et au canal $R_c$ (qui dictent l'amplitude des courants transverses s'y développant respectivement).

Lorsque cette résistance de transfert devient faible par rapport aux résistances transverses, la longueur de contrôle diminue, c'est-à-dire que le transfert d'électrons est suffisamment grand entre les deux « veines » de courant longitudinales pour rapidement annuler la différence de potentiel entre le liquide et l'interface. Dans ce cas, le contrôle n'est effectif que sur une faible distance aux deux extrémités du canal.

La Figure 11 représente l'évolution typique de la longueur de contrôle en fonction de la concentration ionique dans l'électrolyte et de la conductivité de l'interface pour des interfaces en SiC conducteur, en l'occurrence en SiCxHy et CNx dont les conductivités ont été déduites de mesures effectuées sur les dispositifs avant leur mise en liquide. Le rapport a été considéré comme fixe dans le cadre de toutes ces courbes et correspond à celui du SiC conducteur. Dans ce calcul, la résistance de transfert ($\gamma_0/I_0$) a été prise constante pour toutes les interfaces. Afin d'obtenir une valeur réaliste pour la longueur de contrôle, on a utilisé la valeur moyenne des surtensions et courants faradiques cathodiques et anodiques obtenus lors de la caractérisation par voltamétrie cyclique des interfaces de SiC conducteur. Plusieurs tendances claires se dégagent de ce calcul. La première est que la longueur typique (et donc le contrôle du FEO) augmente avec la conductivité de l'électrolyte. La seconde constatation est que la longueur typique de contrôle peut être limitée, à forte concentration, par la résistance du matériau polarisable comme montré sur les courbes correspondantes à l'interfaces en SiC conducteur.

Cette dépendance se retrouve dans l'expression de la longueur typique de contrôle donnée précédemment : dans le premier cas, $R_c \gg R_l$ et la longueur typique de contrôle tends vers zéro quand $R_c$ tends vers l'infinie. Dans le second cas, $R_l \gg R_c$ et la longueur typique tends vers une constante qui dépend de la conductivité du matériau polarisable.

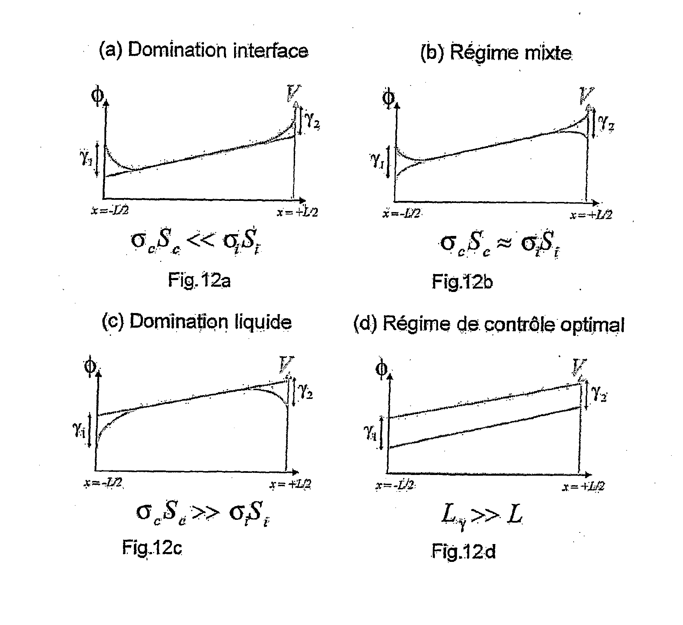

Les Figures 12a à 12d représentent de manière schématique le potentiel qui se développe respectivement dans le liquide et dans l'interface d'une part une longueur de contrôle inférieure à la longueur totale du canal et pour les trois types de régimes précédemment cités qui dépendent de la conductivité relative des deux veines électriques, et d'autre part pour une longueur de contrôle supérieure à la longueur totale du canal.

Lorsque la conductivité ionique du liquide diminue, le courant faradique devient grand par rapport au courant qui se développe dans la « veine » liquide. Comme le nombre de porteurs de charge est faible dans le canal, il suffit de quelques microns pour que les porteurs de charge issus de l'interface viennent modifier le potentiel électrique dans le liquide. Ce dernier s'aligne alors sur le potentiel électrique dans l'interface : c'est un régime de domination de l'interface comme montré sur la figure 12a.

Lorsque l'on augmente la concentration ionique de l'électrolyte, $R_l$ et $R_c$ deviennent du même ordre de grandeur. Il n'y a alors pas de domination de l'interface sur le liquide ou vice et versa. Il s'instaure un régime mixte, comme montré sur la figure 12b et les électrons échangés entre les deux « veines » de courant modifient simultanément le potentiel dans le liquide et dans l'interface. Ces derniers s'alignent alors mutuellement sur une valeur intermédiaire.

A forte conductivité ionique, au contraire, c'est la conductivité de l'interface qui peut devenir limitante. Ce cas de figure s'observe notamment pour l'interface de SiC conducteur qui présente la plus faible conductivité des matériaux représentés sur la Figure 11. Dans ce cas, c'est le liquide qui possède le plus grand réservoir de porteurs de charge. C'est donc lui qui fixe le potentiel électrique dans l'interface et on obtient un régime de domination du liquide comme montré sur la figure 12 c.

Dans le cas où la longueur de contrôle n'est pas suffisante pour conserver une surtension constante le long du canal, c'est bien évidemment le régime de domination du liquide qui nous intéresse, puisqu'il concerne les électrolytes fortement ioniques, a priori utilisés en bioséparation, et qu'il est à l'origine d'un courant faradique négligeable pour la solution n'entraînant pas de changement de composition notable. De plus, le champ électrique transverse restera constant dans le liquide tout le long du microcanal.

Pour obtenir ce régime de contrôle optimal, on peut donc augmenter les courants électriques transverses comme nous venons de le discuter. Maximiser la résistance de transfert entre l'interface et le liquide est cependant une seconde façon pour augmenter la longueur typique de contrôle. Si l'on est obligé de travailler à faible force ionique, cette stratégie sera même indispensable.

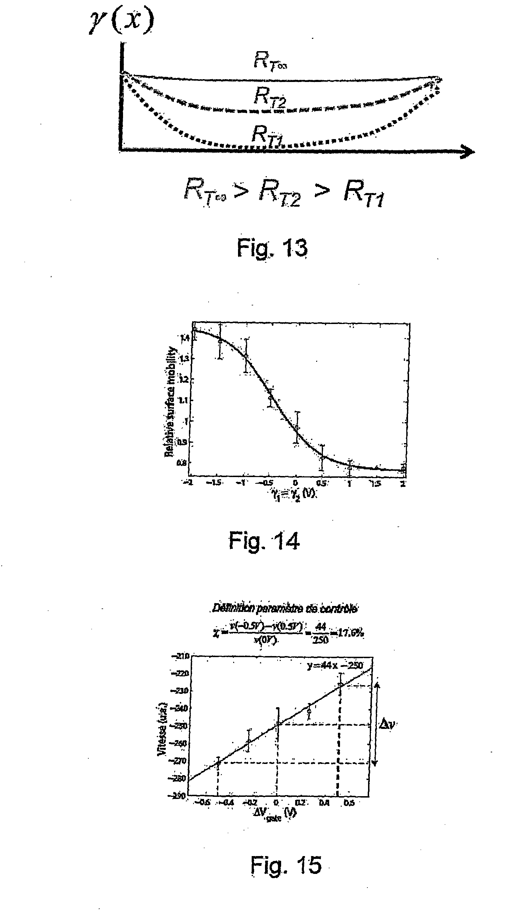

La Figure 13 montre l'allure de la surtension obtenue le long du microcanal quand la résistance de transfert est augmentée. Une interface idéalement polarisable, c'est-à-dire dont la résistance de transfert est considérée comme infinie ($R_{T\infty}$), permet de maintenir une surtension constante tout le long de l'interface. Pour une conductivité d'électrolyte donnée et une interface suffisamment conductrice, c'est ce paramètre qui doit être maximisé pour améliorer le contrôle du flux électroosmotique.

Ainsi, il a été possible dans le cas du système représenté en Figure 8 d'obtenir des contrôle du FEO pour des surtensions appliquées aux deux extrémités équivalentes ($\gamma_1 = \gamma_2 = y$). La Figure 14 montre un exemple de contrôle obtenu pour des surtensions invérieures à 2 V en valeur absolue pour une interface de SiC conducteur et un électrolyte composé de KCl (1 mM).

Lorsque la surtension est contrôlée entre -0.5V et + 0.5V, le contrôle du flux électroosmotique est linéaire et on peut définir un facteur de contrôle $\chi$ adimensionnel à partir de cette variation linéaire comme :

$$\chi = \frac{\Delta v}{v_0}$$

où $\Delta v$ correspond à la variation de vitesse électroosmotique pour une variation de surtension de 1 V et $v_0$ est la vitesse de l'interface pour une surtension nulle. La Figure 15. montre un exemple de contrôle où $\chi = 17.6$ % pour une interface de CNx et un électrolyte de KCl (10 $\mu$M).

Il est possible d'atteindre avec des électrolytes plus conducteurs des facteurs de contrôle de plus de 100 % et ainsi inverser le sens du FEO.

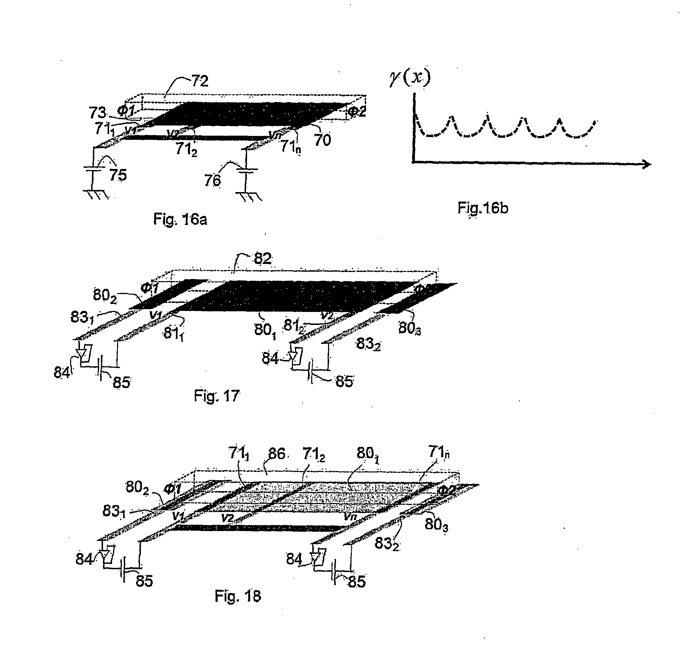

La figure 16a présente un troisième mode de réalisation de l'agencement d'une interface polarisable 70 et son réseau associé d'électrodes $71_1$, $71_2$,..., $71_n$, avec un microcanal 72. Un générateur de tension, 74, 75 est associé à chacune des électrodes d'extrémité $71_1$, et $71_n$ l'interface polarisable 70 constitue une partie de la paroi inférieure 73 du microcanal 72 et les électrodes sont disposées transversalement sous l'interface et selon un axe perpendiculaire à celui de l'axe du canal. La figure 16b montre l'évolution de la surtension $\gamma$ le long du microcanal 72, le potentiel dans l'interface polarisable étant soutenu par le réseau d'électrodes contrairement à la configuration de la Fig. 13.

La figure 17 présente un quatrième mode de réalisation de l'agencement d'une interface polarisable principale $80_1$ et deux interfaces polarisabes secondaires $80_2$, $80_3$ situées aux extrémités opposées de l'interface principale $80_1$. Ces interfaces constituent une partie de l'une des paroi d'un microcanal 82. Un réseau de deux électrodes $81_1$, $81_2$ est associé à l'interface principale $80_1$. En outre, une électrode de référence, respectivement $83_1$, $83_2$ est est associée à chacune des interfaces polarisables secondaires $80_2$, $80_3$, ces électrodes étant aptes à mesurer les tensions $\Phi1$ et $\Phi2$ du liquide dans le microcanal 82 à chacune desdites extrémités. Chacune des électrodes de référence est connectée à l'une des électrodes associées à l'interface polarisable principale par l'intermédiaire d'un dispositif suiveur 84 et d'un générateur de tension 85. Toutes ces électrodes sont disposées transversalement sous l'interface et selon un axe perpendiculaire à celui de l'axe du canal.

La figure 18 présente un cinquième mode de réalisation de l'agencement d'une interface polarisable principale $80_1$ et deux interfaces polarisabes secondaires $80_2$, $80_3$ situées aux extrémités opposées de l'interface principale $80_1$. Ces interfaces constituent une partie de l'une des paroi d'un microcanal 86. Un réseau d'électrodes $71_1$, $71_2$,..., $71_n$ est associé à l'interface principale $80_1$. En outre, une électrode de référence, respectivement $83_1$, $83_2$ est associée à chacune des interfaces polarisables secondaires $80_2$, $80_3$ ces électrodes étant aptes à mesurer les tensions $\Phi1$ et $\Phi2$ du liquide dans le microcanal 82 à chacune desdites extrémités. Chacune des électrodes de référence est connectée à l'une des électrodes associées à l'interface polarisable principale par l'intermédiaire d'un dispositif suiveur 84 et d'un générateur de tension 85.

Dans cet exemple de réalisation les électrodes sont positionnées au dessus de l'interfaces polarisable qui leur est associée et sont en contact direct avec le liquide contrairement aux modes de réalisations précédents.

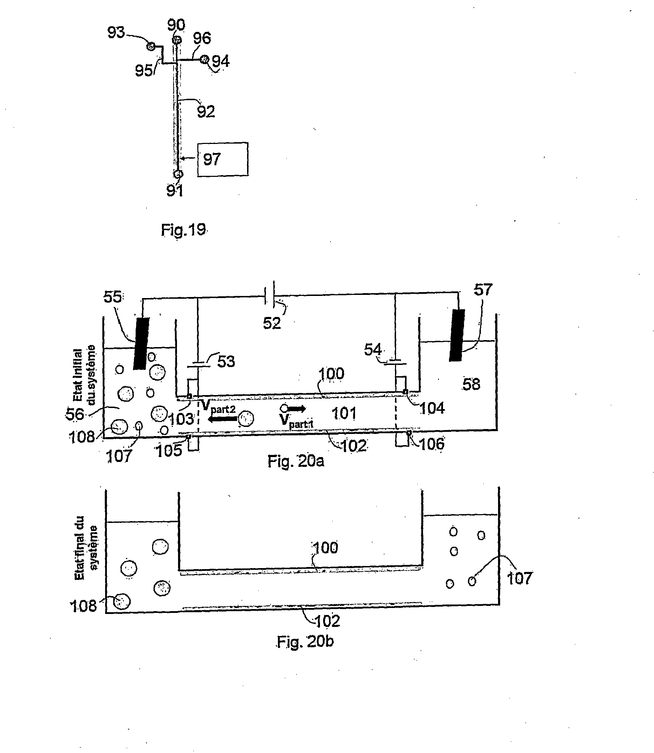

La figure 19 présente un exemple d'application d'un dispositif selon l'invention à une colonne de séparation électrophorétique dans un système de séparation en puce de géométrie connue. Cette colonne comporte un premier et un second réservoir 90, 91 séparés par un microcanal rectiligne de séparation 92. Un troisième et un quatrième réservoir 93, 94 sont disposées à proximité dudit premier réservoir 90 et sont connectés audit microcanal de séparation 92 respectivement par un microcanal 95 doublement coudé et par un microcanal rectiligne 96. La section du microcanal de séparation est rectangulaire et au moins l'une de ses parois, voire deux, est recouverte ou constituée par une couche en matériau conducteur et polarisable constitutive d'une interface polarisable 76 apte à entrer en contact avec un fluide circulant dans le microcanal de séparation 92. Des moyens 97 de détection d'analytes, constitués par exemple par une caméra, des moyens de spectroscopie, des moyens d'analyse par fluorescence... sont positionnés en regard du canal de séparation, à proximité du deuxième réservoir 91.

La figure 20 présente un exemple d'application d'un dispositif selon l'invention comme porte électrophorétique, permettant ainsi de grandement simplifier la géométrie des colonnes de séparation électrophorétiques existantes. Le dispositif utilisé est celui de la figure 4 excepté en ce que la technique de fabrication utilisée est la technique dite « Verre-PDMS-Verre » décrite précédemment et permettant que les interfaces polarisables sont constituées par un premier revêtement 100 disposé sur la face interne de la paroi inférieure d'un microcanal 101 et par un second revêtement 102 disposé sur la face interne de la paroi supérieure du microcanal 101, ces revêtements étant connectés à un réseau associé d'électrodes 103, 104, 105, 106 elles mêmes reliées à des générateurs de tension 52, 53 54.

La possibilité de choisir le Flux électro-osmotique (FEO) indépendamment du champ transverse ouvre aussi d'autres perspectives à la séparation électrophorétique. En effet, il est possible de choisir indépendamment du champ électrique transverse la valeur du contreflux que les molécules vont devoir remonter pour traverser le microcanal. Lorsqu'un FEO suffisant est opposé à la migration électrophorétique, le transport des molécules les plus lentes peut même être stoppé et l'on peut alors obtenir le résultat montré sur la figure 20b avec les molécules 108 restant dans le premier réservoir 56 dans lequel elles étaient initialement tandis que les molécules 107 ayant une mobilité électrophorétique plus grande traverse le microcanal 101 jusqu'à atteindre le second réservoir 58.

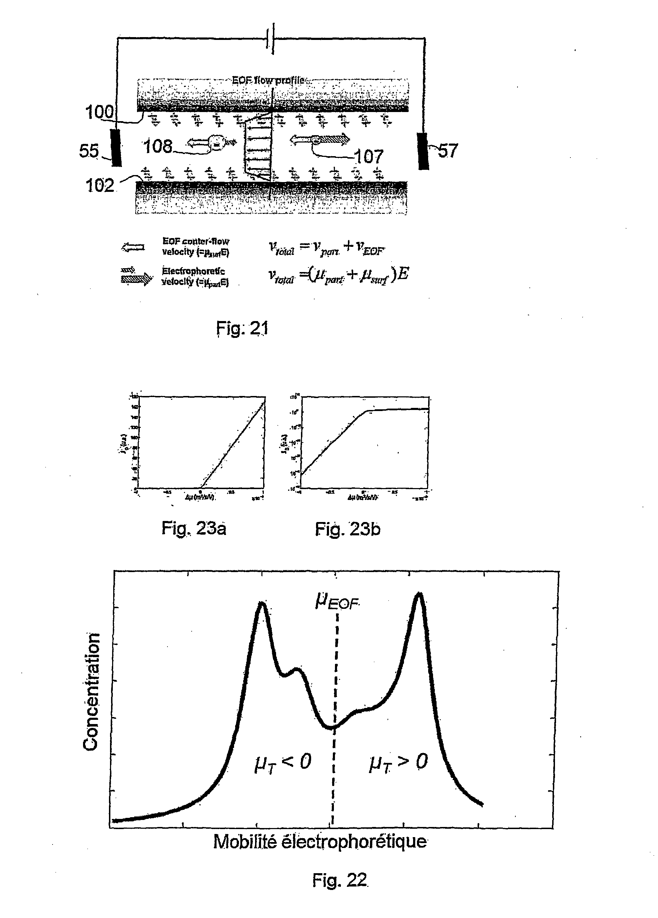

Ce phénomène est explicité par la figure 21. La molécule de gauche 108 ne présente pas une vitesse électrophorétique suffisante pour « lutter » contre le FEO. Sa vitesse globale est négative dans le microcanal. La molécule de droite possède au contraire une mobilité électrophorétique suffisante pour remonter le FEO. Elle est transportée du réservoir de gauche 56 vers le réservoir de droite 58.

On rappelle que la vitesse d'une particule chargée, soumise à un champ transverse, est proportionnelle à ce dernier. La mobilité totale de la particule est la somme de sa mobilité propre et de la mobilité de surface. Ainsi, si la particule possède une mobilité électrophorétique supérieure à l'inverse de la mobilité de surface, celle-ci aura une vitesse globale positive : elle est transportée par le canal. Si au contraire sa mobilité propre est trop faible, sa vitesse au sein du microcanal sera négative. Cette molécule n'est pas transportée. Le microcanal joue alors le rôle de porte électrophorétique puisqu'il ne laisse passer qu'une gamme de mobilités électrophorétiques supérieures à une mobilité critique.

En prenant un échantillon biologique dand lequel les espèces présentes ont une concentration en fonction de leur mobilité électrophorétique telle que représentée sur la figure 22. Un dispositif tel que celui de la figure 20 permet de séparer l'échantillon biologique en deux sous-échantillons de spectre électrophorétique distinct. Suivant le sens du champ électrique, l'une ou l'autre des gammes électrophorétiques sera transportée à travers le microcanal.

La mobilité de coupure $\mu_{EOF}$ est donc définie par la mobilité de surface. Elle peut être modifiée à souhait à l'aide des interfaces polarisables. Il est alors possible de séparer un échantillon en deux sous échantillons présentant des distributions de mobilités distinctes. Pour un champ électrique donné, seule une gamme de molécules sera transportée par le microcanal. Il suffit d'inverser le signe du champ transverse sans modifier la mobilité de surface pour que la relation d'ordre soit inversée et que ce soit au contraire l'autre gamme de mobilités qui soit transportée.

Pour une vitesse de particule *v* donnée (non nulle), on peut montrer que le coefficient de transport $J_0$ au travers d'un canal de section S et de longueur L vérifie la relation :

$$J_0 = \frac{C_0 v S}{1 - e^{-vL/D}}$$

Cette variation du coefficient de transport a été calculée en fonction de la différence de mobilité $\Delta\mu$ par rapport à la mobilité de coupure pour un canal de longueur 1 mm, un coefficient de diffusion de 10-10 m2.s-1 et un champ électrique de 100 V/cm (10 V à travers la porte), on obtient alors le flux représenté, respectivement linéairement et de façon logarithmique sur les figures 23a et 23b.

La porte électrophorétique fonctionne comme un filtre passe-haut ou passe-bas (si on inverse le champ transverse). Sa coupure est très franche puisqu'on observe une diminution du coefficient de transport d'une décade tous les 0.02 $\mu$m/s/(V/cm). Il s'agit là d'une différence de mobilité déjà difficile à discriminer en électrophorèse capillaire classique. Ce type de dispositif constitue un système de fractionnement élémentaire qui peut être utilisé comme cellule de base d'un système de fractionnement plus complexe.

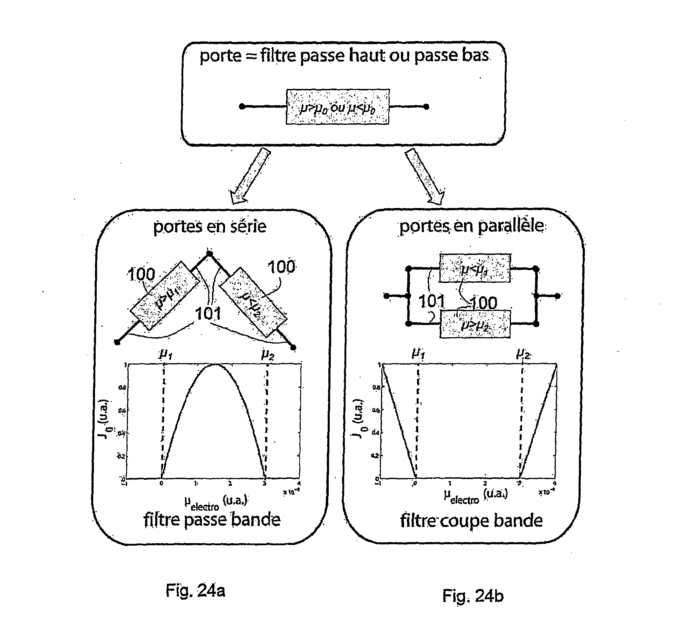

Comme montré sur les figures 24a et 24b, deux portes électrophorétiques peuvent être associées en parallèle ou en série afin de réaliser des fonction de tri électrophorétiques de type passe bande ou coupe bande. Dans le cas de deux portes électrophorétiques en série, on obtient un filtre passe-bande. Avec ce type de système, il est possible de suivre en continue la présence d'une gamme électrophorétique dans un échantillon. Dans le cas de deux portes électrophorétiques en parallèle, on obtient un filtre coupe bande. Il est alors possible de filtrer une gamme électrophorétique contenu dans un échantillon initial. Il est possible de multiplier le nombre de portes électrophorétiques de manière importante.

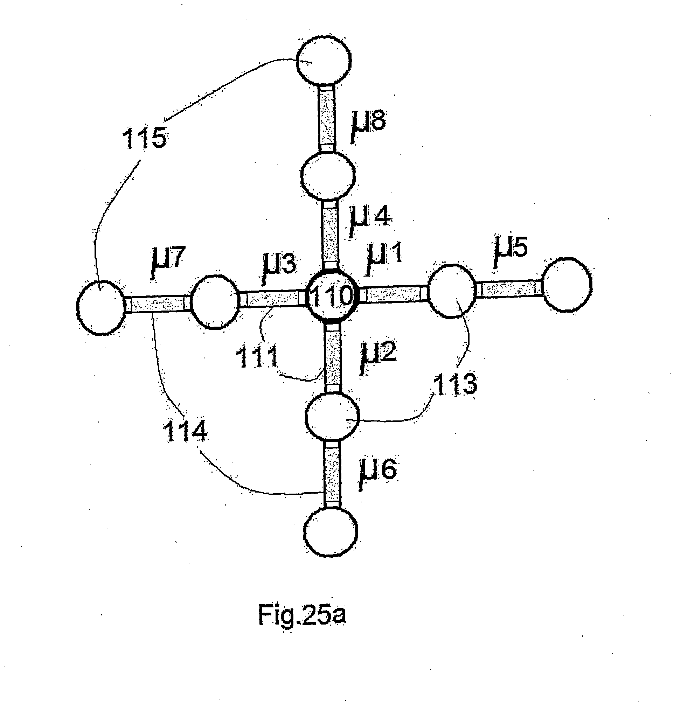

Les figures 25a à 25c sont des schéma simplifiés d'un dispositif comportant un réservoir central 110 destiné à recevoir un échantillon à analyser et connecté, dans cet exemple de réalisation, à un système de portes électrophorétiques complexe. Dans le cadre de la figure 25a, chaque réseau est constitué, en partant dudit réservoir central, par un premier canal 111 dont l'autre extrémité est reliée à un second réservoir 113 lui-même relié à un second microcanal 114 lui-même relié à un troisième réservoir 115.

Chacun des premier et second microcanaux 111 et 114 comporte au moins une partie de l'une de ses parois recouverte intérieurement ou constituée par un matériau conducteur et polarisable, par exemple une très fine couche (1 nm) d'aluminium, ce matériau étant connecté à un réseau non représenté d'électrodes, par exemple en platine (50nm), elles mêmes reliées à des moyens non représentés, de contrôle du potentiel électrique. Ces interfaces sont ainsi aptes à contrôler le potentiel de surface indépendamment les uns des autres dans les microcanaux 111 et 114. Par ailleurs des moyens, non représentés, électriques et/ou mécaniques sont aptes à générer une différence de potentiel ou un gradient de pression entre les différents réservoirs 110, 113 et 115.

En contrôlant les différentes tensions et, éventuellement les pressions, il est possible d'obtenir une mobilité de coupure $\mu 1$ à $\mu 8$ particulière au niveau de chacun des premiers et seconds microcanaux permettant, ainsi de fractionner l'échantillon initial, dans cet exemple de réalisation, en 9 sous-groupes de molécules ayant des distributions de mobilité électrophorétique différentes.

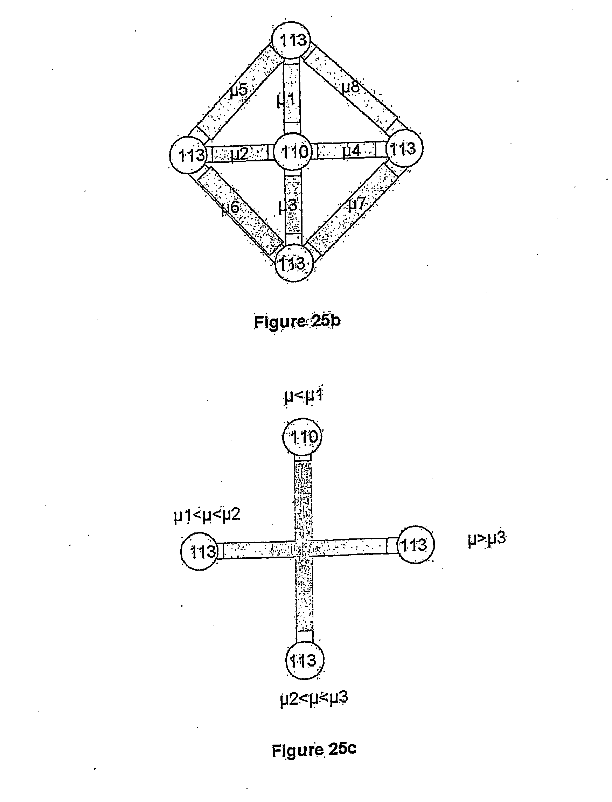

Il est bien sûr possible d'augmenter indéfiniment le nombre de portes électrophorétiques et de réservoirs ainsi que de connecter connecter plusieurs réservoirs sous forme d'un réseau croisé comme présenté dans la Figure 25 b.

Enfin, comme les propriétés des portes électrophorétiques sont modifiables par simple changement des consignes en tension, un même réseau de portes électrophorétiques peut permettre une multitude de fonctions sans même avoir à changer de puce. Un tel dispositif peut aussi fonctionner de manière séquentielle ou en continu.

La figure 25c montre une variante de réalisation de la figure 25a dans laquelle chacun des quatre réseaux ne comporte qu'un microcanal 111 et un second réservoir 112. Un tel dispositif est adapté pour fonctionner par séquences et permet de séparer quatre groupes de molécules ayant des mobilité électrophorétiques différentes.

**Revendications**

1. Dispositif microfluidique de séparation ou de fractionnement ou de préconcentration d'analytes contenus dans un électrolyte aqueux comportant au moins deux réservoirs séparés par au moins un microcanal et/ ou nanocanal, dispositif **caractérisé en ce que**:

   - ledit au moins un microcanal et/ ou nanocanal a une géométrie planaire,
   - au moins une partie de la paroi du microcanal supérieure et/ou inférieure est constituée et/ou recouverte intérieurement d'un matériau ou groupe de matériaux conducteur et polarisable constituant une interface ou un réseau d'interfaces polarisables,
   - au moins une électrode ou au moins un réseau d'électrodes est connecté en au moins un point du matériau ou groupe de matériaux polarisables,
   - le matériau ou groupe de matériaux conducteur et polarisable présente une fenêtre de polarisabilité d'au moins 0,5V pour les réactions cathodiques et anodiques,
   - la conductance électrique surfacique de ladite interface ou réseau d'interfaces étant au moins supérieure à 100 nS.

2. Dispositif selon la revendication 1, **caractérisé en ce que** le microcanal comporte n parois, avec n>2 et au plus n-1 parois est recouverte ou constituée par un matériau ou groupe de matériaux conducteur et polarisable constituant une interface ou un réseau d'interfaces polarisables.

3. Dispositif selon l'une quelconque des revendications 1 et 2, **caractérisé en ce que** le matériau constitutif de ladite interface polarisable comporte au moins l'un des matériaux suivants : SiC, CNx, le carbone pur, le diamant dopé.

4. Dispositif selon l'une quelconque des revendications 1 à 3 **caractérisé en ce qu'**un traitement chimique et/ou un greffage de surface est appliqué à ladite interface polarisable afin d'augmenter sa polarisabilité.

5. Dispositif selon l'une quelconque des revendications 1 à 4, **caractérisé en ce qu'**il comporte au moins une électrode de référence constituée préférentiellement d'une
partie du réseau d'interface polarisable non connexe à ce réseau et connecté en au moins un point à une électrode non connexe au reste du réseau d'électrode, cette électrode étant apte à mesurer le potentiel électrique de l'électrolyte en un point du réseau microfluidique.

6. Dispositif selon l'une quelconque des revendications 1 à 5, **caractérisé en ce qu'**il comporte au moins une première et une seconde électrodes dites " de champ longitudinal " auxquelles sont associées un générateur de tension, ces électrodes étant disposées respectivement d'un côté et de l'autre côté d'au moins une partie du réseau fluidique contenant le réseau d'interfaces polarisables microcanal et étant aptes à générer, une variation de potentiel électrique dans électrolyte.

7. Dispositif selon l'une quelconque des revendications 5 et 6, **caractérisé en ce qu'**il comporte au moins un moyen électrique apte à fixer le potentiel électrique en au moins un point du réseau d'électrodes et ce, relativement au potentiel d'au moins l'une des électrodes dites " de champ longitudinal " ou d'au moins une électrode de référence, soit directement connectée à cette dernière ou connectée à un moyen électrique suiveur en tension apte à suivre le potentiel de cette électrode de référence.

8. Dispositif selon l'une quelconque des revendications 1 à 7, **caractérisé en ce qu'**il comporte au moins des premiers moyens de génération d'une surpression au niveau de l'un au moins des réservoirs, ces moyens étant préférablement aussi aptes à contrôler la valeur de cette surpression.

9. Procédé de séparation ou de fractionnement ou de préconcentration d'analytes contenus dans un électrolyte aqueux mis en oeuvre par un dispositif selon l'une au moins des revendications 5 à 8, **caractérisé en ce qu'**il comporte les étapes suivantes :

   - remplir au moins un réservoir avec un électrolyte et un échantillon à analyser comportant les analytes,
   - appliquer au moins une différence de potentiel entre au moins une électrode longitudinale ou de référence et au moins une électrode de contrôle connectée en un point du réseau polarisable,
   - appliquer au moins une différence de potentiel au niveau des électrodes longitudinales et/ou une différence de pression au niveau des réservoirs,
   - détecter, à l'aide d'un détecteur, la présence d'analytes au niveau d'au moins un point du réseau microfluidique.

**Patentansprüche**

1. Mikrofluidikvorrichtung zur Trennung oder Auftrennung oder Vorkonzentrierung von in einem wässrigen Elektrolyten enthaltenen Analyten, die mindestens zwei Behälter aufweist, die durch mindestens einen Mikrokanal und/oder Nanokanal getrennt sind, wobei die Vorrichtung **dadurch gekennzeichnet ist, dass**:

   - der mindestens eine Mikrokanal und/oder Nanokanal eine planare Geometrie aufweist,
   - mindestens ein Teil der oberen und/oder unteren Wand des Mikrokanals aus einem leitfähigen und polarisierbaren Material oder einer Gruppe dieser Materialien gebildet und/oder innen damit beschichtet ist das bzw. die eine polarisierbare Grenzfläche oder ein Netzwerk aus polarisierbaren Grenzflächen darstellt,
   - mindestens eine Elektrode oder mindestens ein Elektrodennetz an mindestens einem Punkt des polarisierbaren Materials oder der Gruppe polarisierbarer Materialien angeschlossen ist,
   - das leitfähige und polarisierbare Material oder die Gruppe dieser Materialien ein Polarisierbarkeitsfenster von mindestens 0,5 V für die kathodische und anodische Reaktion aufweist,
   - der elektrische Oberflächenwirkleitwert der Grenzfläche oder des Netzwerks aus Grenzflächen mindestens mehr als 100 nS beträgt.

2. Vorrichtung nach Anspruch 1, **dadurch gekennzeichnet, dass** der Mikrokanal n Wände aufweist, wobei n>2 und höchstens n-1 Wände mit einem leitfähigen und polarisierbaren Material oder einer Gruppe dieser Materialien beschichtet sind oder davon gebildet werden, das bzw. die eine polarisierbare Grenzfläche oder ein Netzwerk aus polarisierbaren Grenzflächen darstellt.

3. Vorrichtung nach einem der Ansprüche 1 und 2, **dadurch gekennzeichnet, dass** das Material, aus dem die polarisierbare Grenzfläche gebildet ist, mindestens eins der folgenden Materialien aufweist: SiC, CNx, reiner Kohlenstoff, dotierter Diamant.

4. Vorrichtung nach einem der Ansprüche 1 bis 3, **dadurch gekennzeichnet, dass** eine chemische Behandlung und/oder eine Pfropfpolymerisation der Oberfläche auf die polarisierbare Grenzfläche angewendet wird, damit ihre Polarisierbarkeit erhöht wird.

**5.** Vorrichtung nach einem der Ansprüche 1 bis 4, **dadurch gekennzeichnet, dass** sie mindestens eine Bezugselektrode aufweist, die vorzugsweise aus einem Teil des Netzwerks aus polarisierbaren Grenzflächen gebildet ist, der nicht mit diesem Netzwerk verknüpft ist und an mindestens einem Punkt mit einer Elektrode verbunden ist, die nicht mit dem Rest des Elektrodennetzes verknüpft ist, wobei diese Elektrode in der Lage ist, das elektrische Potenzial des Elektrolyten an einem Punkt des mikrofluidischen Netzwerks zu messen.

**6.** Vorrichtung nach einem der Ansprüche 1 bis 5, **dadurch gekennzeichnet, dass** sie mindestens eine erste und eine zweite sogenannte "Längsfeld"elektrode aufweist, denen ein Spannungserzeuger zugehörig ist, wobei diese Elektroden auf einer Seite beziehungsweise der anderen Seite von mindestens einem Teil des fluidischen Netzwerks angeordnet sind, der das Netzwerk aus polarisierbaren Mikrokanalgrenzflächen enthält, und in der Lage sind, eine Änderung des elektrischen Potenzials in dem Elektrolyten zu erzeugen.

**7.** Vorrichtung nach einem der Ansprüche 5 und 6, **dadurch gekennzeichnet, dass** sie mindestens ein elektrisches Mittel aufweist, das in der Lage ist, das elektrische Potenzial an mindestens einem Punkt des Elektrodennetzes relativ zum Potenzial von mindestens einer der sogenannten "Längsfeld"elektroden oder von mindestens einer Bezugselektrode festzulegen, das heißt direkt mit letzterer verbunden ist oder mit einem elektrischen Spannungsfolgermittel verbunden ist, das in der Lage ist, dem Potenzial dieser Bezugselektrode zu folgen.

**8.** Vorrichtung nach einem der Ansprüche 1 bis 7, **dadurch gekennzeichnet, dass** sie mindestens erste Mittel zum Erzeugen eines Überdrucks an mindestens einem der Behälter aufweist, wobei diese Mittel vorzugsweise auch in der Lage sind, den Wert dieses Überdrucks zu regeln.

**9.** Verfahren zum Trennen oder Auftrennen oder Vorkonzentrieren von in einem wässrigen Elektrolyten enthaltenen Analyten, das mit einer Vorrichtung nach mindestens einem der Ansprüche 5 bis 8 durchgeführt wird, **dadurch gekennzeichnet, dass** es folgende Schritte umfasst:

- Füllen von mindestens einem Behälter mit einem Elektrolyten und einer zu untersuchenden Probe, die die Analyten aufweist,
- Anlegen von mindestens einer Potenzialdifferenz zwischen mindestens einer Längselektrode oder Bezugselektrode und mindestens einer Steuerelektrode, die an einem Punkt des polarisierbaren Netzwerks angeschlossen ist,

- Anlegen von mindestens einer Potenzialdifferenz an den Längselektroden und/oder einer Druckdifferenz an den Behältern,
- mithilfe einer Erfassungsvorrichtung Erfassen des Vorhandenseins von Analyten an mindestens einem Punkt des mikrofluidischen Netzwerks.

**Claims**

**1.** Microfluidic device for separating, fractionating, or preconcentrating analytes contained in an electrolyte having at least two reservoirs separated by at least one microchannel and/or nanochannel, wherein:

- said at least one microchannel and/or nanochannel has a planar geometry,
- at least part of the upper and/or lower wall of the microchannel is made of and/or coated interiorly with a conducting and polarizable material or group of materials constituting a polarizable interface or interface network,
- at least one electrode or at least one electrode network is connected at at least one point of the polarizable material or group of materials,
- the conductive and polarizable material or group of materials has a polarizability window being at least 0.5 V for cathodic and anodic reactions,
- the surface electrical conductance of said interface or interface network being equal to at least 100 nS.

**2.** Device according to claim 1, wherein the microchannel has n walls where n>2 and at most n-1 walls are coated with or comprised of a conducting and polarizable material or group of materials constituting a polarizable interface or interface network.

**3.** Device according to anyone of claims 1 and 2, wherein the material of which said polarizable interface includes at least one of the following materials: SiC, CNx, pure carbon, doped diamond.

**4.** Device according to anyone of claims 1 to 3, wherein a chemical treatment and/or surface grafting is applied to said polarizable interface in order to increase its polarizability.

**5.** device according to anyone of claims 1 to 4, wherein the device has at least one reference electrode composed of a part of the polarizable interface network not connected to this network and connected at at least one point to an electrode not connected to the rest of the electrode network, this reference electrode being able to measure the electric potential of the electrolyte at a point in the microfluidic network

6.  device according to anyone of claims 1 to 5, wherein the device has at least a first and a second electrode known as "longitudinal field" electrodes with which a voltage generator is associated, these electrodes being disposed respectively on one and the other side of at least one part of the fluidic network containing the microchannel polarizable interface network and being able to generate a change in electric potential in the electrolyte.

7.  device according to anyone of claims 5 and 6, wherein the device has at least one electrical means able to set the electric potential at at least one point in the electrode network relative to the potential of at least one of said "longitudinal field" electrodes or at least one reference electrode, namely directly connected to the latter electrode or connected to a voltage follower electrical means able to follow the potential of this reference electrode.

8.  device according to anyone of claims 1 to 7, wherein the device has at least first means for generating an overpressure in at least one of the reservoirs and, preferably, for controlling the value of said overpressure.

9.  method for separating, fractionating, or preconcentrating analytes contained in an aqueous electrolyte implemented by a device according to claim 1, comprising the following steps:

> - filling at least one reservoir with an electrolyte and a specimen to be analyzed that contains analytes,
> - applying at least one potential difference between at least one longitudinal or reference electrode and at least one control electrode connected at a point in the polarizable network,
> - applying at least one potential difference at the longitudinal electrodes and/or a pressure difference between reservoirs,
> - with the aid of a detector, detecting the presence of analytes at at least one point of the microfluidic network.

FIG. 1, ART ANTÉRIEUR

fig. 2

**A**

$\Delta V_{ext}$ ~25

$\Delta V_{gate}$ 26

Classical flowFET configuration

$V_0$

24

23

$\phi(x)$

21

20

22

$\vec{X}$

▬ Metal electrodes (Pt, Au, Al, etc...)

▥ Dielectric barrier (typically $SiO_2$)

▱ Electrolyte (KCl)

Fig. 3

EP 2 350 634 B1

10

verre

15

Su8

Si

16

12₁   10   12₂

Réseau
électrode

14

16

10   13

Réseau
polarisable

14

12

17   19 13   18

14

10

12₁   Vu en section AA'   12₂

Figure 4a

Vu du dessus

$12_2$

17

13

18

AA'

10

14

$12_1$

BB'

Vu en section BB'

19

14

10

13

Figure 4B

Vu du dessus

Figure 4C

EP 2 350 634 B1

$\Delta V_{ext}$  34

$\Delta V^1_{gate}$  35  Polarisable interface configuration  $\Delta V^2_{gate}$  38

37  V(x)  36  31

32  $\phi(x)$  30  33

X

■ Metal electrodes (Pt, Au, Al, etc...)

Semiconducting polarisable electrodes (SiC or CNx)

Electrolyte (KCl)

Fig. 5

fenêtre de polarisibilité

Fig. 6

Fig. 8

verre

22B    41B

47                                    48

47        22B    41B        23
                                      48

verre

microsablage

22A

22A    41A

22A

47    41B    41A    23
                    48

22B    Vu en section AA'

Figure 7 A

**Vu du dessus**  **Zone de connection des électrodes**

42  45
47  40  48
AA'
44
43  46

BB'

**Vu en section BB'**

22B  49A  41A  49C
23  43  44  40  44  45
49B  41B  49D  22A

Figure 7B

# Géométrie

**Fig. 9a**

# Distributions des potentiels

**Fig. 9b**

# Distributions des courants

**Fig. 9c**

Fig. 10

Fig. 11

**(a) Domination interface**

$$\sigma_c S_c \ll \sigma_i S_i$$

Fig.12a

**(b) Régime mixte**

$$\sigma_c S_c \approx \sigma_i S_i$$

Fig.12b

**(c) Domination liquide**

$$\sigma_c S_c \gg \sigma_i S_i$$

Fig.12c

**(d) Régime de contrôle optimal**

$$L_\gamma \gg L$$

Fig.12d

Fig. 13

Fig. 14

Fig. 15

Fig. 16a

Fig. 16b

Fig. 17

Fig. 18

Fig.19

Fig. 20a

Fig. 20b

EOF flow profile

100

55

108 ⇐─○─⇐    ⇐─▨─▷
107

57

102

⇐  EOF conter-flow velocity (=μ$_{surf}$E)

▷  Electrophoretic velocity (=μ$_{part}$E)

$$v_{total} = v_{part} + v_{EOF}$$

$$v_{total} = (\mu_{part} + \mu_{surf})E$$

Fig. 21

Fig. 23a

Fig. 23b

Concentration

$\mu_{EOF}$

$\mu_T < 0$     $\mu_T > 0$

Mobilité électrophorétique

Fig. 22

Fig. 24a

Fig. 24b

Fig.25a

Figure 25b

Figure 25c

## RÉFÉRENCES CITÉES DANS LA DESCRIPTION

### Documents brevets cités dans la description

- FR 2936316
- US 5151164 A
- US 5358618 A
- WO 0060341 A
- EP 1326827 A

### Littérature non-brevet citée dans la description

- **HUANG, L.R.** *The principles of separation in CE, Chromatographia supplément,* vol. 54 (9), 15-23
- **PLECIS A. ; NANTEUIL C. ; HAGHIRI-GOSNET A. ; CHEN Y.** Electro-preconcentration with charge selective nanochannels. *Analytical Chemistry,* 2008
- **SCHASFOORT, R.B.M. et al.** Field-effect flow control for microfabricated fluidic networks. *Science,* 1999
- **KARNIK, R ; K. CASTELINO ; A. MAJUMDAR.** Field-effect control of protein transport in a nanofluidic transistor circuit. *Applied Physics Letters,* 2006
- Zeta potentiel in colloids science. Academic press, 1981
- **MCDONALD, J.C. ; G.M. WHITESIDES.** Poly(dimethylsiloxane) as a material for fabricating microfluidic devices. *Accounts of Chemical Research,* 2002, vol. 35 (7), 491-499
- **PLECIS, A. ; Y. CHEN.** Fabrication of microfluidic devices based on glass-PDMS-glass technology. *Microelectronic Engineering,* 2007, vol. 84 (5-8), 1265-1269
- **PLECIS A. ; CHEN Y.** Microfluidic analogy of the wheatstone bridge for systematic investigations of electroosmotic flows. *Analytical Chemistry,* 2008, vol. 80 (10), 3736-42